# EUROPÄISCHE PATENTSCHRIFT

(11) **EP 3 030 795 B1**
(45) Veröffentlichungstag und Bekanntmachung des Hinweises auf die Patenterteilung: **04.11.2020**
(21) Anmeldenummer: 14766703.4
(22) Anmeldetag: 15.09.2014
(51) Int. Cl.: F16B 2/24

(54) **FEDERVERBINDUNGSELEMENT**
SPRING CONNECTION ELEMENT
ÉLÉMENT DE LIAISON ÉLASTIQUE

(30) Priorität: 20.09.2013 DE 102013219013
(43) Veröffentlichungstag der Anmeldung: 15.06.2016
(73) Patentinhaber: Böllhoff Verbindungstechnik GmbH, 33649 Bielefeld (DE)
(72) Erfinder: STASTNY, Petr, 29301 Mlada Boleslav-Kosmonosy (CZ); VORDERWISCH, Alexander, 33803 Steinhagen (DE); KAHRE, Michael, 32051 Herford (DE)
(74) Vertreter: HWP Intellectual Property
(86) Internationale Anmeldenummer: PCT/EP2014/069636
(87) Internationale Veröffentlichungsnummer: WO 2015/039997

(56) Entgegenhaltungen:
- EP-A1- 0 992 694
- WO-A1-86/03810
- WO-A1-2005/115251
- WO-A1-2007/134588
- WO-A1-2011/053170
- US-A- 2 210 061
- US-A- 2 371 674
- US-A- 2 756 848
- IR DE RIDDER: "Verbindingen met draadbussen en draadveren", METAALBEWERKING, Bd. 20, Nr. 9, 22. Oktober 1954 (1954-10-22), Seiten 144-146, XP001650513,

## Beschreibung

### 1. Gebiet der Erfindung

Die vorliegende Erfindung betrifft ein Federverbindungselement, mit dem über einen Verkrallsitz in einer Bauteilöffnung mindestens zwei Bauteile miteinander verbindbar sind. Des Weiteren betrifft vorliegende Erfindung ein Installations- und ein Deinstallationsverfahren für ein derartiges Federverbindungselement. Zudem offenbart vorliegende Erfindung ein Installationswerkzeug für das oben genannte Federverbindungselement.

### 2. Hintergrund der Erfindung

Im Stand der Technik sind verschiedene Verbindungselemente bekannt, die mindestens zwei vorgelochte Bauteile miteinander verbinden. Ein bewährtes Vorgehen besteht darin, einen Gewindebolzen durch die Bauteilöffnungen zu stecken und die Bauteile durch Aufschrauben einer Mutter auf den Gewindebolzen aneinander zu befestigen. Dies erfordert aber eine Zugänglichkeit der Verbindung von beiden Seiten, die nicht immer gegeben ist.

Daher schlägt WO 2007/134588 A1 eine Federschraube vor, die aus einer regelmäßig gewickelten Drahtwendel mit eng zueinander beabstandeten oder aneinander anliegenden benachbarten Drahtwicklungen besteht. Nur mit Hilfe dieser Wicklungsanordnung, die zudem auf einem starren und unflexiblen Federdraht aufbaut, ist es möglich, eine gewindeförmige Außenkontur der Federschraube zu erzeugen. An einem Ende der Drahtwendel ist der Draht zu einer flächigen Spirale gewickelt, so dass sich eine kopfähnliche Konstruktion ergibt. Das andere Ende der Drahtwendel weist einen radial in die Wendel ragenden Installationssteg auf, mit dem die Federschraube in eine Bauteilöffnung eingedreht wird. Diese Federschraube ist für schwingende, kriechende, sich setzende oder allgemein verformbare Materialien gedacht. Beim Eindrehen der Federschraube in die Bauteilöffnung wird eine Gewindespur in die radiale Innenwand der Bauteilöffnung geschnitten. Diese Federschraube funktioniert daher nach dem Prinzip einer selbstschneidenden Schraube, nur dass sie mit geringeren geometrischen Anforderungen gerade im Hinblick auf die Ausbildung eines Gewindes hergestellt ist. Auf Grund dieser Schraubenfunktion ist einerseits der Installationsaufwand für diese Federschraube groß, da sie zeitaufwendig in die Bauteilöffnung eingedreht werden muss. Des Weiteren muss das Material der Federschraube auf das Bauteilmaterial abgestimmt sein, damit sich tatsächlich die Federschraube eine Gewindespur in das Bauteilmaterial schneiden kann. Andernfalls bietet diese Federschraube keinerlei Halt in der Bauteilöffnung. Es ist von Nachteil, dass die Federschraube mit hoher Genauigkeit hergestellt sein muss, damit sich die Federschraube in der regelmäßig geschnittenen Gewindespur halten kann.

WO 2012/084385 A1 beschreibt einen schneidenden Federaufsatz, der auf eine Schraube aufgesetzt wird. Hier ist bereits von Nachteil, dass das Verbindungselement zweiteilig aufgebaut ist, da es aus einer Schraube und einem schneidenden Federaufsatz besteht. Des Weiteren ist auch hier der Installationsaufwand zeitaufwendig, da die Schraube mit Sorgfalt und ein Gewinde schneidend in die Bauteilöffnung eingedreht werden muss.

WO 2011/053170 beschreibt eine Vielzahl von Verbindungselementen, die entweder aus einem Draht zu einer Drahtwendel gewickelt sind oder zumindest einen Drahtwendelbereich zwischen einem massiven Kopf und einem massiven Ende bzw. Spitzenbereich des Verbindungselements aufweisen. Die hier beschriebenen Verbindungselemente weisen eine ebene radiale Außenseite oder eine aus abgerundeten Teilabschnitten bestehende radiale Außenseite auf. Diese Gestaltung der radialen Außenseite unterstützt einen Presssitz der Verbindungselemente in einer Bauteilöffnung, wobei das Verbindungselement aufgrund der nach außen gerichteten radialen Federkräfte die radiale Außenseite gegen die Bauteilwand der Bohrung drückt. Diese inneren radial gerichteten Federkräfte sowie eine Torsionssteifigkeit und eine axiale Stabilität der offenbarten Verbindungselemente werden gerade durch eine dichte Windung der Drahtwendel erzielt. Dabei liegen im Wesentlichen die benachbarten Windungen aneinander an. Die hier beschriebenen Verbindungselemente sind in radialer Richtung komprimierbar, aber nicht in axialer Richtung verformbar. Sobald das Verbindungselement durch radiale Kompression in eine Bauteilöffnung gezwängt worden ist, erzeugt das inhärente Bestreben des Verbindungselements, sich auszudehnen, für die Verbindung zwischen Bauteil und Verbindungselement. Entsprechend fordert die Installation einen hohen Kraftaufwand, um das Verbindungselement in eine Bauteilöffnung einbringen zu können. Des Weiteren bewirken gerade die hohen durch das Verbindungselement aufgebrachten Verbindungskräfte, beispielsweise in radialer Richtung, dass sich kriechende, set-zende und fließfähige Materialien unter dieser mechanischen Belastung zum Nachteil der Verbindung verändern. Die Werkstoffe geben nämlich nach, sodass die Verbindungsfestigkeit zwischen diesem federstarken Verbindungselement und dem Bauteil geschwächt wird. Ein weiterer Nachteil besteht darin, dass das beschriebene Verbindungselement in seiner radialen und axialen Größe ähnlich einer Schraube an die Bauteilöffnung angepasst sein muss. Denn aufgrund der starren und unflexiblen Drahtwendel im zumindest mittigen Bereich des Verbindungselements lässt sich keine Anpassung an veränderte Bauteilgeometrien durch Veränderung der Geometrie des Verbindungselements erzielen.

Eine Befestigungsklammer ist in DE 31 47 430 A1 beschrieben. Diese Befestigungsklammer besteht aus einem Draht, der zu einer sprungfederähnlichen Drahtwendel mit einem kopfähnlichen Spiralbund gewickelt ist. In Anpassung an eine Bauteilöffnung, in die die Befestigungsklammer zur Verbindung von mindestens zwei Bauteilen eingesetzt werden soll, ist die Drahtwendel in ihrem Außendurchmesser kleiner ausgebildet als der Innendurchmesser der Bohrung. Daraus folgt, dass diese Befestigungsklammer nicht durch einen radial wirkenden Presssitz zwei Bauteile aneinander befestigt. Vielmehr besitzt diese Befestigungsklammer an ihrem dem Spiralbund gegenüberliegenden axialen Ende einen Haken, sodass die Befestigungsklammer mindestens zwei Bauteile durch Zugspannung zwischen dem Haken und dem Spiralbund aneinander befestigt. Im Speziellen ist die Befestigungsklammer nur in Durchgangsbohrungen installierbar. Dort wird der Haken so weit in axialer Richtung von der Drahtwendel entfernt, dass er sich am Ausgang der Bauteilbohrung außerhalb der Bohrung an der gegenüberliegenden Bauteilwand verhaken kann. Somit ist diese Befestigungsklammer nachteilig nur in Durchgangsbohrungen anwendbar. Zudem erstreckt sich der Haken in radialer Richtung über die Drahtwendel hinaus, was eine entsprechende Anpassung des zur Installation erforderlichen Platzes notwendig macht. Ein weiterer Nachteil besteht darin, dass diese Befestigungsklammer eine radiale Bewegung der Bauteile in Bezug auf die Drahtwendel nicht verhindern kann.

In US 2,756,848 wird eine Bremsbelag-Rückhaltevorrichtung mit einer konischen Feder beschrieben. Hierbei wird ein Bremsbelag-Halteelement mit einem Bremsbelag-Element kombiniert, wobei die Elemente an Innenflächen anstoßen, in denen fluchtende Löcher vorgesehen sind. Schraubenfedermittel stehen in Druckeingriff mit den Löchern in dem zweiten der Elemente und erstrecken sich zwischen den Elementen, um die Elemente aneinander zu befestigen. Die Schraubenfedermittel weisen an einem Ende konische Abschnitte auf, die in den Senkungen des einen Satzes von Löchern in dem einen Element sitzen, um das Zusammenhalten der Elemente zu unterstützen. Die Schraubenfedermittel sind in der Mitte hohl und weisen Zapfen auf, die sich in die hohle Mitte erstrecken, um das Greifen der Feder durch ein in die Schraubenfedermittel eingesetztes Werkzeug zu erleichtern.

Ein Installationswerkzeug für ein Federverbindungselement ist in der Veröffentlichung IR DE RIDDER: "Verbindingen met draadbussen en draadveren", METAALBEWERKING, Bd. 20, Nr. 9, 22. Oktober 1954, Seiten 144-146 beschrieben. Das Installationswerkzeug weist einen Installationsdorn sowie einen Werkzeugkopf auf.

US 2,210,061 beschreibt ein weiteres Installationswerkzeug, das ebenfalls einen Installationsdorn sowie einen Werkzeugkopf umfasst.

Ausgehend von den oben beschriebenen Verbindungselementen besteht somit der Bedarf, ein flexibel einsetzbares Verbindungselement vereinfachter Herstellung und Installation im Vergleich zum Stand der Technik bereitzustellen.

### 3. Zusammenfassung der Erfindung

Die oben genannte Aufgabe wird durch ein Federverbindungselement gemäß dem unabhängigen Patentanspruch 1, ein Installationsverfahren für dieses Federverbindungselement gemäß dem unabhängigen Patentanspruch 16, ein Deinstallationsverfahren für ein in einer Bauteilöffnung installiertes Federverbindungselement gemäß dem unabhängigen Patentanspruch 18, ein Installationswerkzeug für dieses Federverbindungselement gemäß dem unabhängigen Patentanspruch 19 sowie durch einen Bauteilverbund mit einem installierten Federverbindungselement gemäß dem unabhängigen Patentanspruch 21 gelöst. Vorteilhafte Ausgestaltungen und Weiterentwicklungen vorliegender Erfindung gehen aus der folgenden Beschreibung, den Zeichnungen sowie den anhängenden Patentansprüchen hervor.

Das erfindungsgemäße Federverbindungselement, mit dem über einen Verkrallsitz in mindestens einer Bauteilöffnung mindestens zwei Bauteile miteinander verbindbar sind, umfasst die folgenden Merkmale: eine sprungfederähnliche Drahtwendel mit einem ersten und einem zweiten Ende, die eine Mehrzahl von axial zueinander beabstandeten, vorzugsweise unregelmäßig geformten, Windungen umfasst, einen sich radial über einen Umfang der Drahtwendel hinaus erstreckenden Spiralbund, der am ersten Ende der Drahtwendel angeordnet ist, und ein zentrales Zugelement, das radial in die Drahtwendel ragend am zweiten Ende der Drahtwendel angeordnet ist, sich nicht axial über die Drahtwendel hinaus erstreckt und mit dem das Federverbindungselement in eine Bauteilöffnung im wesentlichen drehungsfrei einziehbar ist, wobei das Federverbindungselement durch eine axiale Zugbelastung radial verjüngbar ist, um ein Einsetzen in die mindestens eine Bauteilöffnung zu erleichtern.

Während sich der Spiralbund des erfindungsgemäßen Federverbindungselements nach Einsetzen in eine Bauteilöffnung an der Bauteilwand abstützt, ist das Federverbindungselement erfindungsgemäß bevorzugt mit Hilfe des Zugelements sowohl in radialer wie auch in axialer Richtung in seiner Form veränderbar und somit an die Verbindungsgegebenheiten anpassbar. Denn die axial voneinander beabstandeten benachbarten Windungen der sprungfederähnlichen Drahtwendel, die vorzugsweise mindestens eine unregelmäßige Windung aufweisen, sowie eine eine axiale Verformung zulassende Federsteifigkeit des Federverbindungselements erlauben eine Anpassung des Federverbindungselements mit Hilfe des zentralen Zugelements. Die sprungfederähnliche Form der Drahtwendel ähnelt Sprungfedern, wie sie beispielsweise in DE 603 017 oder DE 493 714 beschrieben sind. Die Wicklungen dieser Sprungfedern sind lose, teilweise unregelmäßig in axialer Richtung voneinander beabstandet, woraus sich eine reduzierte axiale Stabilität ergibt.

Zudem sorgen vorteilhafterweise die Windungen der sprungfederähnlichen Drahtwendel ebenfalls dafür, dass eine ausreichende radiale Druckkraft durch die Drahtwendel erzeugt wird. Auf dieser Grundlage ist das Federverbindungselement in der Lage, sich in der angrenzenden Wand der Bauteilöffnung derart zu verkrallen, dass sowohl eine kraftschlüssige wie auch eine formschlüssige Verbindung zwischen dem Federverbindungselement und dem mindestens einen Bauteil entsteht. In diesem Zusammenhang ist hervorzuheben, dass mit Hilfe des Zugelements das erfindungsgemäße Federverbindungselement im Wesentlichen drehungsfrei installierbar ist. Im Wesentlichen drehungsfrei bedeutet in diesem Zusammenhang gemäß einer ersten bevorzugten Ausführungsform, dass das Federverbindungselement ohne Drehung um seine Längsachse in axialer Richtung in mindestens eine Bauteilöffnung eingesetzt wird. Gemäß einer zweiten bevorzugten Ausführungsform bedeutet im Wesentlichen drehungsfrei, dass während der Installation das Federverbindungselement maximal in einem Winkelbereich <360 °, vorzugsweise <270 °, insbesondere <180 °, um seine Längsachse verschwenkt wird. Mit diesem Verschwenken aber nicht Drehen wird die verlässliche Verankerung des Federverbindungselements in der Bauteilwand unterstützt.

Zur Unterstützung der oben beschriebenen Funktionalität des Federverbindungselements sind erfindungsgemäß bevorzugt unterschiedliche Formgestaltungen bzw. Konfigurationen des Federverbindungselements vorteilhaft. Gemäß einer bevorzugten Ausführungsform ist ein Draht der Drahtwendel des Federverbindungselements in einem Querschnitt und bezogen auf die Drahtwendel mit einer radialen Breite b und einer axialen Dicke s ausgestattet. Die radiale Breite b und die axiale Dicke s des Drahts besitzen ein Größenverhältnis gemäß 1,25 ≤ b/s ≤ 3,5, bevorzugt 2 ≤ b/s ≤ 3. Aus diesem Größenverhältnis der radialen Breite b und der axialen Dicke s des Querschnitts des Drahts des Federverbindungselements ergibt sich, dass der Draht in axialer Richtung der Drahtwendel abgeflacht ausgebildet ist. Damit liegt die Schmalseite des Drahts an der Bauteilwand an, sodass die Radialkräfte des Federverbindungselements mit einem kleineren Flächenelement auf die Bauteilwand wirken als in axialer Richtung der Drahtwendel und auf diese Weise den Verkrallsitz in der Bauteilwand begünstigen.

Gemäß einer weiteren bevorzugten Ausführungsform weist der Draht der Drahtwendel in seinem Querschnitt und bezogen auf die Drahtwendel zumindest an der radialen Außenseite der Drahtwendel einen Krümmungsradius r auf, der kleiner ist als die axiale Dicke s des Drahts, vorzugsweise 0,05 s ≤ r ≤ 0,5s. Mit Hilfe des erfindungsgemäß bevorzugten Krümmungsradius des Drahtquerschnitts an der radialen Außenseite der Drahtwendel läuft der Draht in seinem Querschnitt radial auswärts ähnlich einer Spitze oder Schneidkante sich verjüngend zu. Diese Geometrie begünstigt ebenfalls, dass sich das Federverbindungselement aufgrund der radial auswärts gerichteten Verriegelungskräfte in der Bauteilwand verkrallt und somit das Federverbindungselement in der Bauteilöffnung sichert. Die dadurch erfindungsgemäß entstehende formschlüssige Verbindung verhindert den Auszug des Federverbindungselements aus der Bauteilöffnung. Während das Federverbindungselement eine verkrallte Position in der Bauteilwand beibehält, ist es beispielsweise aufgrund von Materialdehnungen oder Kriechvorgängen in der Lage, diesen Größenänderungen des Bauteils zu folgen. Dies wird vor allem dadurch realisiert, dass sich das Federverbindungselement in axialer Richtung verlängern kann.

Gemäß einer weiteren erfindungsgemäß bevorzugten Ausgestaltung vorliegender Erfindung weist die Drahtwendel eine Steigung p pro Umlauf U im Vergleich zu der axialen Dicke s des Drahts der Drahtwendel im Querschnitt und bezogen auf die Drahtwendel mit dem Wert p ≥ 1,25 s U⁻¹ auf. In diesem Zusammenhang weiter bevorzugt befindet sich die Steigung p im Bereich von 1,25 s ≤ p ≤ 3,5 s, weiter bevorzugt im Bereich von 1,25 s ≤ p ≤ 2,7 s und noch mehr bevorzugt im Bereich von 2,0 s ≤ p ≤ 2,7 s. Wie aus den angegebenen Steigungswerten hervorgeht, ist die Drahtwendel des erfindungsgemäßen Federverbindungselements vorzugsweise nur lose gewickelt. Mit Hilfe dieser losen Windung in den bevorzugten Steigungsbereichen wird gewährleistet, dass das Federverbindungselement nur eine begrenzte axiale Steifigkeit besitzt. Anders formuliert folgt aus dieser speziellen Steigung eine axiale Flexibilität des Federverbindungselements, sodass es an unterschiedliche Bauteilgeometrien und im Speziellen Tiefen von Bauteilöffnungen und Verbindungsbesonderheiten flexibel anpassbar ist. Somit lässt sich vorzugsweise das Federverbindungselement in axialer Richtung soweit verlängern, bis ein bevorzugter Tiefenbereich in einer Bauteilöffnung erreicht ist, indem sich das Federverbindungselement radial in der Bauteilwand verkrallen soll.

Um den festen Sitz des Federverbindungselements in der Bauteilöffnung weiter zu unterstützen, weist der Draht der Drahtwendel mit der axialen Dicke s und der radialen Breite b im Querschnitt und bezogen auf die Drahtwendel folgendes Profil auf: in Breitenrichtung eiförmig oder linsenförmig und/oder in Breitenrichtung eiförmig oder linsenförmig und in Dickenrichtung einseitig oder beidseitig abgeflacht und/oder in Dickenrichtung länglich und/oder in Dickenrichtung länglich mit einer radial auswärtigen konkaven Einbuchtung und/oder in Dickenrichtung S-förmig und/oder in Dickenrichtung länglich mit einer in Breitenrichtung radial auswärtigen Ausbuchtung und einer radial einwärtigen Einbuchtung. Die oben beschriebenen und erfindungsgemäß bevorzugten Querschnittsgestaltungen des Drahts der Drahtwendel fördern zum einen ein radiales Verankern oder Verkrallen des Federverbindungselements in der Wand des Bauteils. Des Weiteren sind über diese Querschnittsgeometrien aber auch die axiale und die radiale Steifigkeit der Drahtwendel einstellbar. Auf diese Weise wird somit die Steifigkeit der Drahtwendel nicht allein durch das Material des Federverbindungselements bestimmt, sondern ebenfalls durch eine geeignete Profilierung des Drahts der Drahtwendel oder ausgewählter Teilbereiche des Drahts der Drahtwendel.

Gemäß einer weiteren bevorzugten Ausführungsform vorliegender Erfindung weist der Draht der Drahtwendel im Querschnitt und bezogen auf die Drahtwendel an einer radialen Außenseite der Drahtwendel eine Verkrallkontur mit einer Schneidenrichtung auf, die bezogen auf eine Längsachse des Federverbindungselements in einem Winkel von γ > 90 ° angeordnet ist. Wie bereits oben erläutert worden ist, läuft der Draht in seinem Querschnitt radial auswärts bezogen auf die Drahtwendel sich verjüngend zu. Nähert man die axiale Oberseite und die axiale Unterseite des Drahtquerschnitts jeweils durch eine Linie an, dann schneiden sich diese beiden Linien an der radialen Außenseite des Drahtquerschnitts und symbolisieren auf diese Weise eine schneidenähnliche Geometrie. Diese schneidenähnliche Geometrie ist erfindungsgemäß bevorzugt derart geformt, dass sie eine entgegen einer Auszugsrichtung blockierende Wirkung entwickelt. Dies wird dadurch erzielt, dass die oben genannte Schneidenrichtung ausgehend von der Längsachse der Drahtwendel einen Winkel größer 90° einschließt. Die Schneidenrichtung ist dabei durch die Winkelhalbierende des Winkels definiert, der durch die axiale Oberseite und die axiale Unterseite der schneidenähnlichen Geometrie an der radialen Außenseite des Querschnitts eingeschlossen wird.

Es ist weiterhin erfindungsgemäß bevorzugt, dass die sprungfederähnliche Drahtwendel unregelmäßig geformte Windungen umfasst, die insbesondere in radialer und/oder in axialer Richtung bezogen auf die Drahtwendel unregelmäßig geformt sind. In spezieller Ausgestaltung dieser Ausführungsform weist die Drahtwendel des Federverbindungselements eine zylindrische Form auf, in der sich mindestens eine der Windungen der Drahtwendel über einen Außendurchmesser der zylindrischen Drahtwendel hinaus erstreckt. Gemäß einer weiteren bevorzugten Ausgestaltung ist die mindestens eine, vorzugsweise zwei bis vier, Windung in einem axialen Mittenbereich der Drahtwendel angeordnet. Zudem besteht vorzugsweise die Drahtwendel aus 3 bis 15, vorzugsweise aus 5 bis 10, Windungen, um das Federverbindungselement zu bilden.

Gemäß vorliegender Erfindung weisen die Windungen der Drahtwendel des Federverbindungselements radial auswärts eine kantige Form auf, sodass die Windungen in der Öffnungswand des Bauteils verkrallbar sind. Genau diese geometrische Gestaltung der Drahtwendel gewährleistet den bereits oben erläuterten Verkrallsitz des Federverbindungselements in der Bauteilöffnung. Um dies weiterhin zu unterstützen, ist es ebenfalls bevorzugt, dass die Windungen der Drahtwendel in einem radialen Querschnitt abgerundet und/oder S-formig oder zumindest radial auswärts scharfkantig ausgeformt sind.

Um dem Federverbindungselement zusätzliche axiale Stabilität und Flexibilität zu geben, ist gemäß einer weiteren bevorzugten Ausführungsform vorliegender Erfindung der Spiralbund sich konisch verjüngend in Richtung der Drahtwendel ausgebildet. Dies unterstützt das Abstützen des Federverbindungselements durch den Spiralbund an der Bauteiloberfläche. Zudem weist das zentrale Zugelement des Federverbindungselements bevorzugt eine für ein Installationswerkzeug über ein Inneres der Drahtwendel zugängliche Abstützfläche auf. Diese Abstützfläche ist durch ein unten beschriebenes Installationswerkzeug zugänglich. In gleicher Weise und ebenfalls erfindungsgemäß bevorzugt ist es ebenfalls denkbar, dass das zentrale Zugelement einen axial über den Spiralbund hinausragenden Installationssteg aufweist, der innerhalb der Drahtwendel verläuft. Mit dem Installationswerkzeug oder dem Installationssteg ist das Zugelement in axialer Richtung auslenkbar, sodass das Federverbindungselement in die Bauteilöffnung hineingezogen wird. Auf diese Weise ergibt sich eine einfache Installation des Federverbindungselements, die gerade bei der Verwendung des Installationsstegs kein zusätzliches Werkzeug erfordert. Falls der Installationssteg nach der Installation des Federverbindungselements stören sollte, ist gemäß einer weiteren Ausführungsform vorliegender Erfindung der Installationssteg über eine Sollbruchstelle im Inneren der Drahtwendel aus dem Federverbindungselement entfernbar.

Zur Erleichterung der Installation des Federverbindungselements weist die Drahtwendel im Bereich des zweiten Endes in axialer Richtung eine Verjüngung auf. Diese Verjüngung ist an die Bauteilöffnung angepasst, sodass hier ein erleichtertes Einsetzen des Federverbindungselements realisierbar ist.

Vorliegende Erfindung umfasst zudem einen Bauteilverbund aus mindestens zwei Bauteilen mit jeweils einer Bauteilöffnung, in der ein Federverbindungselement gemäß einer der oben beschriebenen bevorzugten Ausgestaltungen installiert ist.

Vorliegende Erfindung offenbart weiterhin ein Installationsverfahren für ein Federverbindungselement aufweisend eine sprungfederähnliche Drahtwendel mit einem ersten und einem zweiten Ende, eine sich radial über einen Umfang der Drahtwendel hinaus erstreckenden Spiralbund, der am ersten Ende der Drahtwendel angeordnet ist, und ein zentrales Zugelement, das radial in die Drahtwendel ragend am zweiten Ende der Drahtwendel angeordnet ist, wobei Windungen der Drahtwendel radial auswärts eine kantige Form aufweisen, insbesondere das Federverbindungselement gemäß einer der oben beschriebenen Ausführungsformen. Dieses Installationsverfahren weist die folgenden Schritte auf: Anordnen von mindestens einem ersten und einem zweiten Bauteil mit zueinander fluchtenden Bauteilöffnungen und Positionieren des Federverbindungselements an einem Eingang der Bauteilöffnung des ersten Bauteils, Aufbringen einer bezogen auf das Federverbindungselement axial gerichteten Druckkraft auf das zentrale Zugelement, sodass das Zugelement die Drahtwendel im wesentlichen drehungsfrei in die Bauteilöffnung zieht, oder Strecken des Federverbindungselements durch Aufbringen einer Zugkraft zwischen Spiralbund und Zugelement, sodass das Federverbindungselement axial gestreckt und radial verjüngt wird, und Einsetzen des gestreckten Federverbindungselements im wesentlichen oder vollständig drehungsfrei in die Bauteilöffnung, und Entlasten des Zugelements, nachdem sich der Spiralbund am ersten Bauteil abstützt, sodass sich mindestens eine der Windungen der Drahtwendel in mindestens einer der Bauteilöffnungen verankert und somit verkrallt, so dass sowohl eine kraftschlüssige wie auch eine formschlüssige Verbindung zwischen dem Federverbindungselement und dem mindestens einen ersten Bauteil entsteht.

In diesem Zusammenhang ist es erfindungsgemäß bevorzugt, dass die Druckkraft auf das Zugelement über den Installationsdorn oder den am Zugelement vorgesehenen Installationssteg aufgebracht wird. In gleicher Weise ermöglichen der Installationsdorn und der Installationssteg ein Einziehen des Federverbindungselements in die Bauteilöffnung. Dieses Einziehen in die Bauteilöffnung wird vorzugsweise dadurch unterstützt, dass eine relative Zugkraft zwischen dem Spiralbund und dem Zugelement erzeugt wird. Dies ist entweder dadurch der Fall, dass sich der Spiralbund an der Bauteiloberfläche am Eingang der Öffnung abstützt. Gemäß einer weiteren Alternative wird der Spiralbund am Installationsdorn festgehalten, während der Installationsdorn das Zugelement weiter axial auslenkt. Diese axiale Zugbelastung des Federverbindungselements führt zu einer radialen Verjüngung des Federverbindungselements, wodurch das Einsetzen in die Bauteilöffnung erleichtert wird. Zudem wird dadurch das Federverbindungselement auf eine gewünschte Länge eingestellt, mit der es sich in der Bauteilöffnung verankern soll. Nach Entlastung des Federverbindungselements in axialer Richtung dehnt sich dieses radial aus und die radiale Außenseite der Drahtwendel verkrallt sich in der Bauteilwand.

Vorliegende Erfindung umfasst zudem ein Deinstallationsverfahren für ein in der Bauteilöffnung installiertes Federverbindungselement, aufweisend eine sprungfederähnliche Drahtwendel mit einem ersten und einem zweiten Ende, einen sich radial über einen Umfang der Drahtwendel hinaus erstreckenden Spiralbund, der am ersten Ende der Drahtwendel angeordnet ist, und ein zentrales Zugelement, das radial in die Drahtwendel ragend am zweiten Ende der Drahtwendel angeordnet ist, wobei Windungen der Drahtwendel radial auswärts eine kantige Form aufweisen. Dieses Deinstallationsverfahren weist die folgenden Schritte auf: Greifen des Spiralbunds des Federverbindungselements, Aufbringen einer axialen Zugbelastung auf das Federverbindungselement, sodass das Federverbindungselement gestreckt und verjüngt wird, und vollständiges Entfernen des Federverbindungselements aus der Bauteilöffnung.

Des Weiteren offenbart vorliegende Erfindung ein Installationswerkzeug für das Federverbindungselement aufweisend eine sprungfederähnliche Drahtwendel mit einem ersten und einem zweiten Ende, einen sich radial über einen Umfang der Drahtwendel hinaus erstreckenden Spiralbund, der am ersten Ende der Drahtwendel angeordnet ist, und ein zentrales Zugelement, das radial in die Drahtwendel ragend am zweiten Ende der Drahtwendel angeordnet ist. Das Installationswerkzeug weist erfindungsgemäß die folgenden Merkmale auf: einen Installationsdorn, auf den das Federverbindungselement aufsteckbar ist, einen Werkzeugschaft angrenzend an den Installationsdorn, der einen größeren Außendurchmesser als der Installationsdorn aufweist, sodass ein Überstrecken des Federverbindungselements verhindert ist, und einen Werkzeugkopf, über den eine axiale Druckkraft auf den Installationsdorn aufbringbar ist.

Mit Hilfe des Installationswerkzeugs ist das Federverbindungselement in einer Bauteilöffnung positionierbar. Sobald der Installationsdorn eine axiale Druckkraft auf das Zugelement des Federverbindungselements innerhalb der Bauteilöffnung aufbringt, erzeugt das Zugelement eine Zugkraft in axialer Richtung, die das Federverbindungselement in die Bauteilöffnung zieht. Gleichzeitig erzeugt diese Druckkraft des Installationsdorns ein radiales Verjüngen des Federverbindungselements, wodurch die Installation des Federverbindungselements unterstützt wird. Damit das Federverbindungselement nicht in axialer Richtung überstreckt wird, weist das Installationswerkzeug eine Schaftdicke auf, die den Innendurchmesser der Bauteilöffnung übersteigt. Daraus folgt, dass das Federverbindungselement maximal die Länge des Installationsdorns annehmen kann, da sich nachfolgend der verdickte Schaft des Installationswerkzeugs am Bauteil abstützt. Nachdem das Federverbindungselement ausreichend tief in der Bauteilöffnung eingesetzt worden ist, wird das Installationswerkzeug und im Speziellen der Installationsdorn aus der Drahtwendel entfernt. Auf diese Weise wird das Zugelement entlastet und federt in axialer Richtung zurück. Gleichzeitig dehnt sich das Federverbindungselement und im Speziellen die Drahtwendel in radialer Richtung aus, sodass sich die einzelnen Windungen der Drahtwendel in der Bauteilwand eingraben und verkrallen.

Erfindungsgemäß ist auf dem Werkzeugschaft des Installationswerkzeugs eine verschiebbare Installationshülse angeordnet, mit der der Spiralbund hintergreifbar ist. Auf diese Weise ist über eine axiale Verschiebung der Installationshülse eine streckende Belastung auf das Federverbindungselement zwischen Installationshülse und Installationsdorn aufbringbar. In diesem Zusammenhang ist es weiterhin bevorzugt, dass die Installationshülse aus mindestens zwei Teilen besteht, sodass die Installationshülse vom Spiralbund entfernbar ist.

### 4. Detaillierte Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine perspektivische Ansicht einer bevorzugten Ausführungsform des erfindungsgemäßen Federverbindungselements,
- Figur 2: eine Seitenansicht einer bevorzugten Ausführungsform des erfindungsgemäßen Federverbindungselements,
- Figur 3: eine axiale Ansicht einer bevorzugten Ausführungsform des erfindungsgemäßen Federverbindungselements ausgehend vom Spiralbund,
- Figur 4: eine bevorzugte Ausführungsform eines in zwei Bauteilen installierten Federverbindungselements,
- Figur 5a bis d: verschiedene bevorzugte Querschnittsformen des Drahts des Federverbindungselements,
- Figur 6: eine bevorzugte Querschnittsform des Drahts des Federverbindungselements,
- Figur 7: die Querschnittsform aus Figur 6 mit weiteren Erläuterungen,
- Figur 8: eine Ausschnittsvergrößerung einer bevorzugten Querschnittsform des Drahts des Federverbindungselements zur Illustration des Krümmungsradius,
- Figur 9: eine bevorzugte Ausführungsform des Federverbindungselements mit Installationswerkzeug vor dem Einbauen am ersten und zweiten Bauteil,
- Figur 10: eine seitliche Schnittdarstellung der Installation des Federverbindungselements mit dem Installationswerkzeug in einem bevorzugten Aufnahmedom eines Bauteils,
- Figur 11: eine vergrößerte Darstellung einer bevorzugten Ausführungsform des Aufnahmedoms des zweiten Bauteils,
- Figuren 12a bis g: verschiedene Sequenzen des Installationsverfahrens des bevorzugten Federverbindungselements mit einem Installationswerkzeug mit bevorzugter Installationshülse,
- Figur 13: ein Flussdiagramm einer bevorzugten Ausführungsform eines Installationsverfahrens, und
- Figur 14: ein Flussdiagramm einer bevorzugten Ausführungsform eines Deinstallationsverfahrens.

### 5. Detaillierte Beschreibung der bevorzugten Ausführungsformen

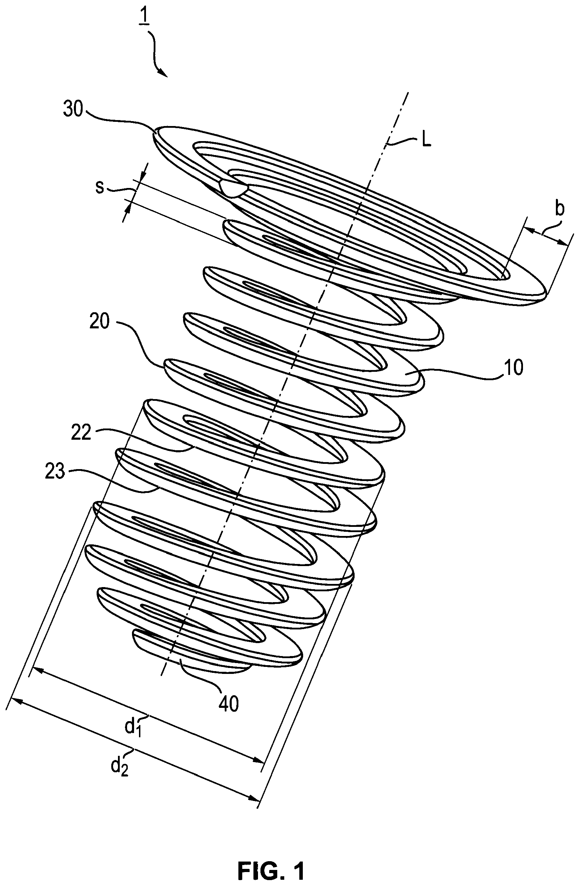

Das Federverbindungselement 1 ist aus einem Draht 10 mit einer bestimmten Querschnittskontur gewickelt. Das Federverbindungselement 1 umfasst eine sprungfederähnliche Drahtwendel 20, die an einem ersten Ende einen Spiralbund 30 und an einem zweiten Ende ein zentrales Zugelement 40 aufweist. Die Drahtwendel 20 umfasst eine Mehrzahl von axial zueinander beabstandeten und unregelmäßig geformten Windungen 22. Erfindungsgemäß bevorzugt weist die Drahtwendel 20 einen bestimmten Außendurchmesser d₁ auf. Dadurch, dass die Windungen 22 regelmäßig oder unregelmäßig geformt sind, weisen unterschiedliche Windungen 22, 23 in einer bevorzugten Ausführungsform verschiedene Außendurchmesser d₁ und d₂ auf (vergleiche Figur 1).

Der bevorzugte Spiralbund 30 besteht aus dem gleichen Draht 10 wie das übrige Federverbindungselement 1. Der Spiralbund 30 ist in einer Radialebene spiralförmig gewickelt. Daraus folgt, dass der Spiralbund 30 einen größeren Außendurchmesser als die Drahtwendel 20 aufweist. Zudem ist der Spiralbund 30 bevorzugt derart konfiguriert, dass er einen Innendurchmesser einer Bauteilöffnung 52 übersteigt. Aufgrund dieser Konstruktion stützt sich der Spiralbund 30 am Bauteil B1 ab, ohne in die Bauteilöffnung 52 gezogen zu werden.

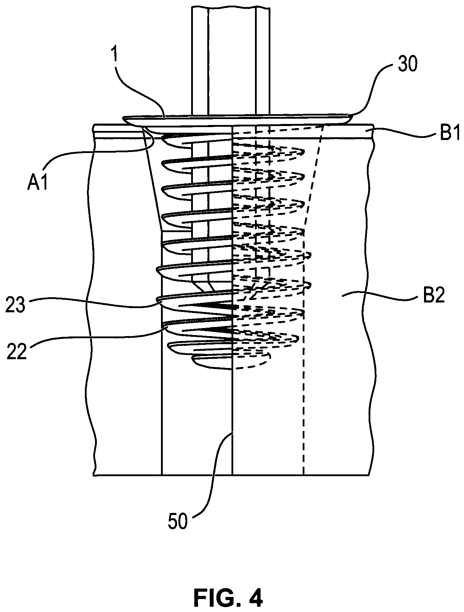

Gemäß einer bevorzugten Ausführungsform vorliegender Erfindung ist der Spiralbund 30 in Richtung der Drahtwendel 20 sich konisch verjüngend ausgebildet. Die konische Form des Spiralbunds 30 unterstützt ein federndes Abstützen auf der Oberseite des Bauteils B1 (siehe Figur 4). Während der Installation des Federverbindungselements 1 in einer Bohrung 52, wird der Spiralbund in axialer Richtung zusammengedrückt. Auf diese Weise bringt der Spiralbund 30 erfindungsgemäß bevorzugt eine axiale Zugkraft auf die Drahtwendel 20 nach deren Installation in der Bohrung 52 auf. Diese Zugkraft sorgt dafür, dass ein Verkrallen der radialen Außenseite der Drahtwendel 20 in der Bauteilwand unterstützt wird. Denn vorzugsweise wirkt diese gegen die Einsetzrichtung des Federverbindungselements 1 gerichtete Zugkraft mit der Schneide und der Schneidenrichtung des Drahtquerschnitts zusammen (siehe unten).

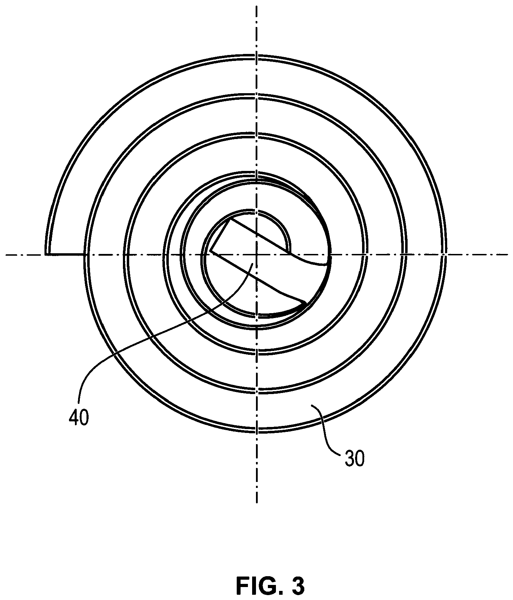

Wie man anhand der Figur 3 erkennen kann, ist das zentrale Zugelement 40 in Form eines radial in das Innere der Drahtwendel 20 ragenden Zapfens ausgebildet. Gemäß einer bevorzugten Ausführungsform vorliegender Erfindung stellt der Zapfen 40 eine Abstützfläche für einen Installationsdorn 62 eines Installationswerkzeugs 60 bereit (siehe unten). Gemäß einer weiteren nicht gezeigten Ausführungsform vorliegender Erfindung erstreckt sich von dem zentralen Zugelement 40 im Inneren der Drahtwendel 20 in Richtung des Spiralbunds 30 ein Installationssteg. Dieser Installationssteg ragt vorzugsweise über den Spiralbund 30 hinaus, sodass er manuell oder mit Hilfe eines Werkzeugs in axialer Richtung, im Speziellen in Richtung des Zugelements 40, auslenkbar ist. Dieser Installationssteg dient in gleicher Weise wie der unten beschriebene Installationsdorn 62 der Installation des Federverbindungselements 1 in der Bohrung 52 des Bauteils B2. Vorzugsweise ist der Installationssteg über eine Sollbruchstelle mit dem zentralen Zugelement 40 verbunden. Nachdem die Installation des Federverbindungselements 1 in der Bohrung 52 abgeschlossen ist, wird vorzugsweise der Installationssteg an der Sollbruchstelle von dem zentralen Zugelement 40 getrennt.

Die Windungen 22, 23 der sprungfederähnlichen Drahtwendel 20 sind gemäß einer bevorzugten Ausführungsform vorliegender Erfindung regelmäßig ausgebildet, so dass sie den gleichen Außendurchmesser aufweisen (nicht gezeigt). Gemäß einer weiteren bevorzugten Ausführungsform sind die Windungen unregelmäßig ausgebildet (siehe Fig. 1). Diese Windungen weisen vorzugsweise einen unterschiedlichen Außendurchmesser auf, wie oben bereits erwähnt worden ist. In diesem Zusammenhang ist es erfindungsgemäß bevorzugt, dass sich bei einer zylindrischen Form der Drahtwendel 20 mindestens eine der Windungen 22, 23 der Drahtwendel 20 über den Außendurchmesser der zylindrischen Drahtwendel 20 hinaus erstreckt. Um einen optimalen Halt des Federverbindungselements 1 in der Bohrung 52 zu gewährleisten, ist die mindestens eine Windung 22, 23, die sich über den Außendurchmesser der zylindrischen Drahtwendel 20 hinaus erstreckt, in einem axialen Mittenbereich der Drahtwendel 20 angeordnet. In diesem Zusammenhang ist es ebenfalls bevorzugt, dass die Drahtwendel 3 bis 15, vorzugsweise 5 bis 10 Windungen 22, 23 umfasst. Die Anzahl der Windungen 22, 23 kann somit entsprechend der Tiefe der Bohrung 52 im Bauteil B1, B2 eingestellt werden. Da gerade die sich über den Außendurchmesser der zylindrischen Drahtwendel hinaus erstreckenden Windungen 23 den Verkrallsitz des Federverbindungselements 1 im Bauteil B2 unterstützen, ist es ebenfalls bevorzugt, eine Mehrzahl dieser sich über den Außendurchmesser der zylindrischen Drahtwendel hinaus erstreckenden Windungen 23 vorzusehen.

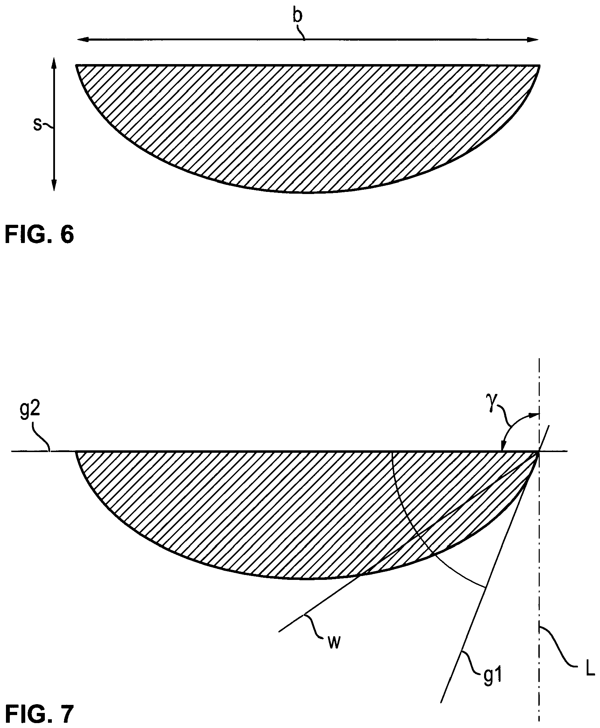

Gemäß einer weiteren bevorzugten Ausführungsform vorliegender Erfindung besitzen die Windungen 22, 23 der Drahtwendel 20 eine bestimmte Steigung p. Die Steigung p bezeichnet die axiale Verlängerung der Drahtwendel 20, nach einem Umlauf von360° um die Längsachse L der Drahtwendel. Vorzugsweise ist die Steigung p ≥ 1,5·s pro Umlauf U, wobei s die axiale Dicke des Drahtes 10 bezogen auf seinen Querschnitt bezeichnet. Die axiale Dicke s ist in Figur 6 veranschaulicht. Um die axiale Steifigkeit des Federverbindungselements 1, das heißt die Zugfestigkeit und die Torsionssteifigkeit, geeignet einstellen zu können, ist die Steigung p der Drahtwendel 20 pro Umlauf U im Vergleich zur axialen Dicke s des Drahtes 10 vorzugsweise folgendermaßen eingestellt: 1,25 s ≤ p ≤ 3,5 s. In diesem Zusammenhang ist es weiter bevorzugt, die Steigung gemäß 1,25 s ≤ p ≤ 2,7 s und noch mehr bevorzugt gemäß 2,0 s ≤ p ≤ 2,7 s einzustellen.

Gemäß einer weiteren bevorzugten Ausführungsform vorliegender Erfindung weisen unterschiedliche Teilbereiche der Drahtwendel 20 unterschiedliche Steigungen p auf. So umfasst beispielsweise die Windung 22 die Steigung p₂₂, die kleiner ist als die Steigung p₂₃ der Windung 23.

Figur 3 zeigt eine bevorzugte Ausführungsform eines installierten Federverbindungselements 1 in der Bauteilöffnung 52 des zweiten Bauteils B2. Das Federverbindungselement 1 verbindet das erste Bauteil B1 mit der Öffnung A1 mit dem zweiten Bauteil B2. Während sich der Spiralbund 30 auf der Oberfläche des ersten Bauteils B1 abstützt, verkrallen sich die einzelnen Windungen 22, 23 in der Wand des zweiten Bauteils B2. Der auf diese Weise entstehende Verkrallsitz des Federverbindungselements 1 in der Bauteilöffnung 52 stellt eine kombinierte form- und kraftschlüssige Verbindung zwischen dem Federverbindungselement 1 und den Bauteilen B1 und B2 dar. Denn die radiale Außenseite mehrerer Windungen 22, 23, vorzugsweise jeder Windung, gräbt sich in die Bauteilwand ein. Dies wird durch die dem Federverbindungselement 1 inhärenten Federspannungen ermöglicht, die radial auswärts gerichtet sind. Zudem wird der Verkrallsitz durch die Variation des Außendurchmessers der Windungen 22, 23 (siehe oben) unterstützt. Es ist ebenfalls bevorzugt, mehr als zwei Bauteile B1, B2 miteinander zu verbinden.

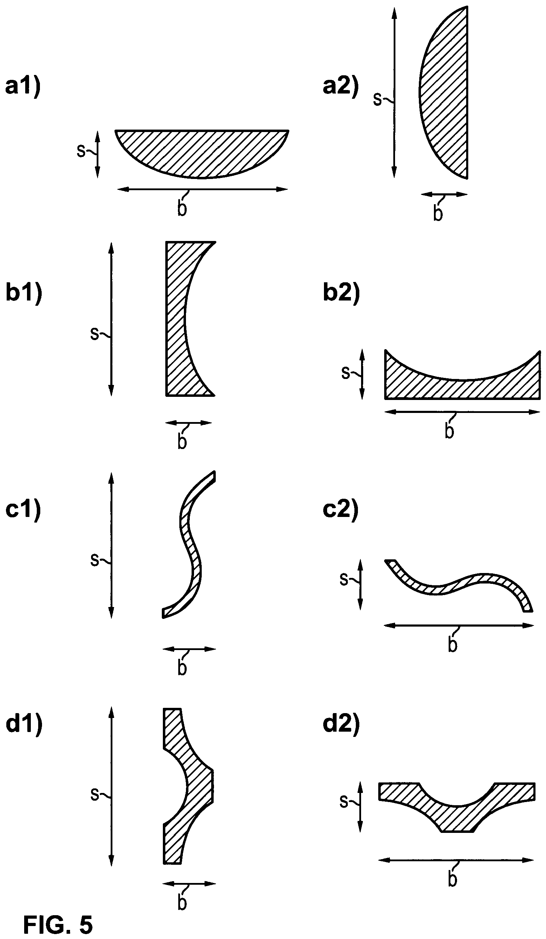

Ein optimaler Sitz des Federverbindungselements 1 in der Bauteilöffnung 52 wird vorzugsweise weiterhin dadurch gefördert, dass der Querschnitt des Drahts 10 ein bestimmtes Profil aufweist. Grundsätzlich wird ein Verkrallen einzelner Windungen 22, 23 in der Bauteilwand dadurch unterstützt, dass der Querschnitt radial auswärts bezogen auf die Drahtwendel 20 eine eckige, kantige oder scharfkantige Form aufweist. Weitere vorteilhafte Querschnittsformen des Drahts 10 sind in den Figuren 5a bis 5d dargestellt. Zur Charakterisierung der einzelnen Querschnittskonturen sind jeweils die radiale Breite b und die axiale Dicke s angegeben. Figur 5a zeigt einen elliptischen und einseitig in Dickenrichtung s abgeflachten Querschnitt. Dabei ist die längere Achse der Ellipse in radialer Richtung der Drahtwendel orientiert. Natürlich ist es ebenfalls bevorzugt, die längere Seite der Ellipse in axialer Richtung anzuordnen und/oder einen oder beide Spitzenbereiche der Ellipse abzuflachen oder abzustumpfen. Vorzugsweise wird dieser Querschnitt des Drahts 10 derart eingesetzt, dass die abgeflachte Seite in Richtung des Spiralbunds 30 angeordnet ist. Es ist ebenfalls ein eiförmiger Querschnitt mit der dickeren Seite radial einwärts und einer ähnlich angeordneten Abflachung bevorzugt. Die Figur 5 b1) zeigt ein Querschnittsprofil, das in axialer Richtung der Drahtwendel 20 gestreckt ausgebildet ist. Zudem umfasst dieses Querschnittsprofil eine konkave Außenseite, sodass zwei spitze oder scharfkantige radial auswärts weisende Bereiche des Profils entstehen. Diese scharfkantigen Bereiche unterstützen ein Verkrallen der entsprechend geformten Windung in der Bauteilwand. Ein weiterer Vorteil der axial gestreckten Querschnittskontur besteht in einer zusätzlichen axialen Steifigkeit der Drahtwendel 20. Eine Drahtwendel 20, deren Draht 10 einen derartigen Querschnitt aufweist, besitzt eine größere Federkonstante als beispielsweise eine Drahtwendel 20 mit einem Drahtquerschnitt gemäß Figur 5a. Eine weitere bevorzugte Querschnittskontur des Drahts 10 ist in Figur 5 c1) gezeigt. Dieser Drahtquerschnitt erstreckt sich ebenfalls in axialer Richtung, sodass er ähnliche Eigenschaften aufweist wie der Querschnitt gemäß Figur 5b. Im Speziellen ist der Querschnitt S-förmig ausgebildet. Eine weitere bevorzugte Ausführungsform des Drahtquerschnitts ist in Figur 5 d1) dargestellt. Dieser Querschnitt ist ebenfalls in Längsrichtung der Drahtwendel 20 länger ausgebildet als in radialer Richtung. Somit weist eine Drahtwendel 20 aus einem derart konfigurierten Draht 10 ebenfalls eine höhere Federkonstante auf, als ein Draht 10, der mit dem Querschnitt gemäß Figur 5 a1) gewickelt ist. Zudem zeichnet sich die Querschnittskontur gemäß Figur 5 d1) dadurch aus, dass an der radialen Innenseite des Drahtquerschnitts ein konkaver Bereich ausgebildet ist. An der radialen Außenseite ist ein eckiger Vorsprung ausgeformt, der ebenfalls bevorzugt eine radial auswärts gerichtete scharfkantige oder spitze Gestalt aufweisen kann.

Eine weitere bevorzugte Unterstützung erhält der Verkrallsitz und somit die Verlässlichkeit des Federverbindungselements 1 in der Querschnittsform des Drahts 10. Dazu zeigen Figur 6 und Figur 5 a1) eine bevorzugte Querschnittsform des Drahts 10. Der Querschnitt des Drahts 10 wird charakterisiert durch die axiale Dicke s und die radiale Breite b. Querschnitt bedeutet im Speziellen einen Schnitt durch den Draht 10 senkrecht zur Längsachse des Drahts 10. Es hat sich als vorteilhaft erwiesen, wenn der Querschnitt des Drahtes 10 durch bestimmte Verhältnisse der axialen Dicke s und der radialen Breite b bestimmt ist. Daher weist der Querschnitt des Drahts 10 gemäß bevorzugter Ausführungsformen vorliegender Erfindung die folgenden Größenverhältnisse auf:
1,25 ≤ b/s ≤ 3,5 und weiter bevorzugt 2 ≤ b/s ≤ 3. Aus den gegebenen Größenverhältnissen folgt, dass beispielsweise ein eiförmiger Querschnitt mit einer längeren Seite entlang der radialen Breite des Drahtes 10 und radial auswärts enger zulaufend als radial einwärts die Funktionalität des Federverbindungselementes 1 unterstützt. Daher ist es bevorzugt, die Drahtquerschnittsprofile der Figuren 5 b1), c1), d1) in einem Winkelbereich von 50° bis 130°, vorzugsweise 75° bis 105°, insbesondere 90° zur Längsachse L anzuordnen. Zur Illustration dieser Anordnungen zeigen die Figuren 5 b2), c2), d2) die Drahtprofile der Figuren 5 b1), c1), d1) in einem bevorzugten Winkel von 90° C zur Längsachse L des Federverbindungselements. Diese Anordnung der Drahtprofile hat den Vorteil, dass sich nach einer Installation des Federverbindungselements in den mindestens zwei Bauteilen die radial außen liegenden Kantenbereiche in der Bauteilwand verkrallen oder verankern. Im Hinblick auf die Ausführungsform gemäß Figur 5a) ist es ebenfalls bevorzugt, diese in einem Winkelbereich von 50° bis 130°, vorzugsweise 75° bis 105°, insbesondere 90° zur Längsachse L anzuordnen. Figur 5 a2) wiederum zeigt eine Anordnung, in der das Profil aus Figur 5 a1) um 90° im Uhrzeigersinn gedreht ist. Es versteht sich, dass sich das oben angegebene bevorzugte b/s-Verhälntnis auf die Drahtprofilanordnungen gemäß den Figuren 5 a1), b2), c2) und d2) oder ähnlicher in radialer Richtung länglich ausgebildete Profile bezieht.

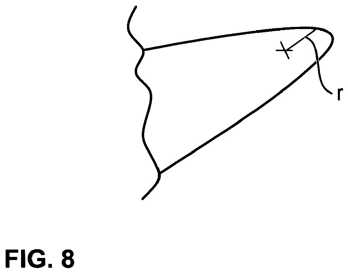

Des Weiteren hat es sich als vorteilhaft und bevorzugt erwiesen, wenn die radiale Außenseite des Querschnitts des Drahts 10 bezogen auf die Drahtwendel 20 einen bestimmten Krümmungsradius r aufweist. Dieser Krümmungsradius r ist in Figur 8 veranschaulicht. Gemäß einer bevorzugten Ausführungsform ist der Krümmungsradius r kleiner als die axiale Dicke s des Querschnitts des Drahts 10. In diesem Zusammenhang ist es weiter bevorzugt, dass der Krümmungsradius sich in folgendem Bereich befindet: 0,05 s ≤ r ≤ 0,5 s. Eine derartige Konfiguration des Krümmungsradius r unterstützt den form- und kraftschlüssigen Sitz des Federverbindungselements 1 in der Bauteilwand.

Gemäß einer weiteren bevorzugten Ausgestaltung vorliegender Erfindung ist der Drahtquerschnitt radial auswärts derart verjüngt, dass er einer Schneidengeometrie ähnelt. Diese Schneidengeometrie, wie sie vorzugsweise in den Figuren 5 a1)und 5 b1), 5 c2) und 5 d2) realisiert und in Figur 7 vergrößert gezeigt ist, schneidet sich durch die radial auswärts gerichteten Kräfte des Federverbindungselements 1 in die Bauteilwand des Bauteils B2 ein. Dadurch wird der oben beschriebene kraft- und formschlüssige Halt des Federverbindungselements 1 im Bauteil B1, B2 unterstützt. In diesem Zusammenhang ist es bevorzugt, wenn die Schneidengeometrie eine bestimmte Schneidenrichtung aufweist. Die Schneidenrichtung ist durch den Querschnitt des Drahts 10 definiert. Nähert man den radial auswärts gerichteten Teil des Querschnitts des Drahts 10 durch zwei Geraden g1 und g2 an, dann schließen die Geraden g1 und g2 einen bestimmten Winkel ein. Sollte der Querschnitt des Drahts 10 eine krummlinige Form aufweisen, dann wird die krummlinige Seite des Querschnitts durch eine Tangente am radialen Außenpunkt angenähert, wie es in Figur 7 durch die Gerade g1 dargestellt ist. Bildet man nun die Winkelhalbierende w für den Winkel zwischen den Geraden g1 und g2, dann veranschaulicht die Winkelhalbierende w die Schneidenrichtung.

Die Schneidenrichtung W ist vorteilhaft und erfindungsgemäß bevorzugt, wenn ein Winkel γ ausgehend von der Längsachse L des Federverbindungselements 1 bis zur Winkelhalbierenden w größer ist als 90°. Weiter bevorzugt sind die Winkelbereiche von 95° < γ < 120°. Bei dieser Schneidenrichtung stemmt sich die radial äußere Seite des Drahts 10 aufgrund der radial wirkenden Federkraft des Federverbindungselements 1 gegen die Bauteilwand. Aufgrund dieser Orientierung wirkt die sich verkrallende Drahtwindung ähnlich einer spanabtragenden Klinge einer möglichen axialen Auszugskraft entgegen. Mit dieser Schneidenrichtung wird somit das Verkrallen des Federverbindungselements 1 in der Bauteilwand verstärkt.

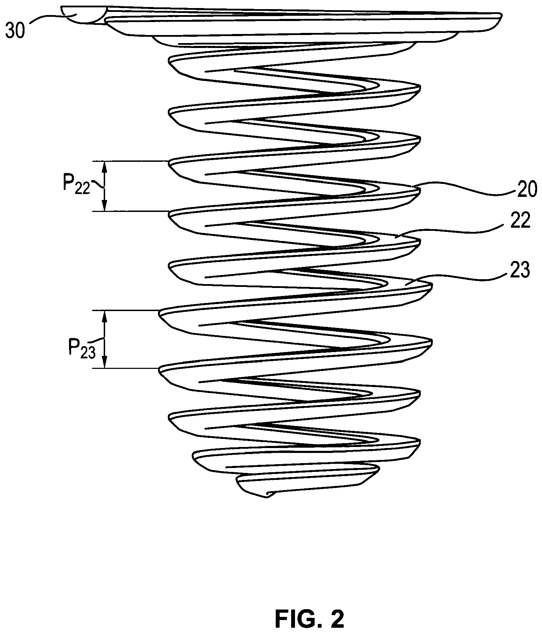

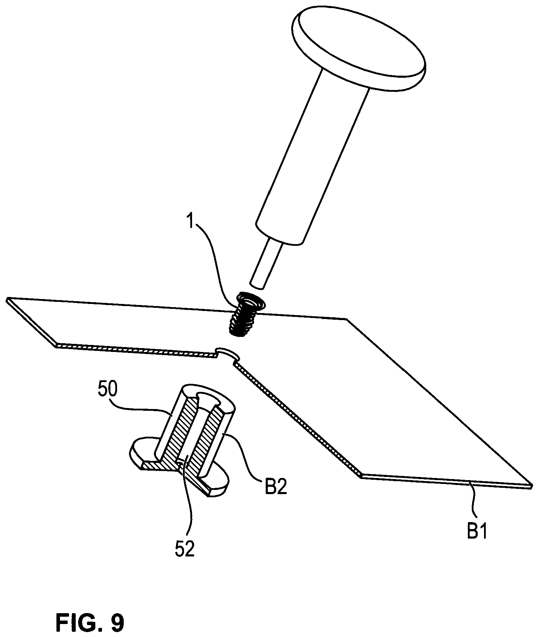

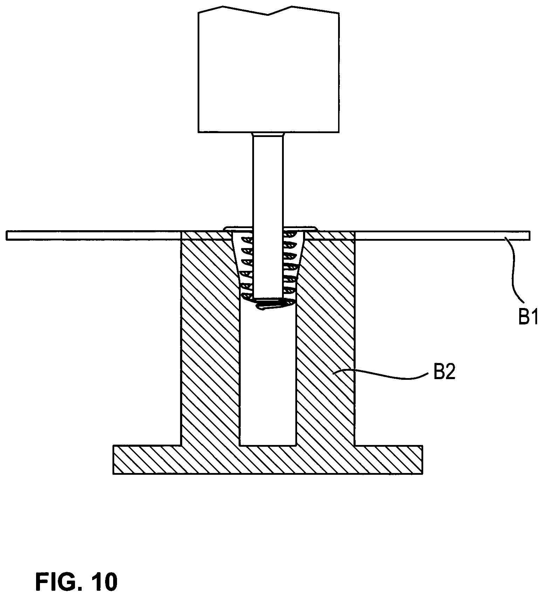

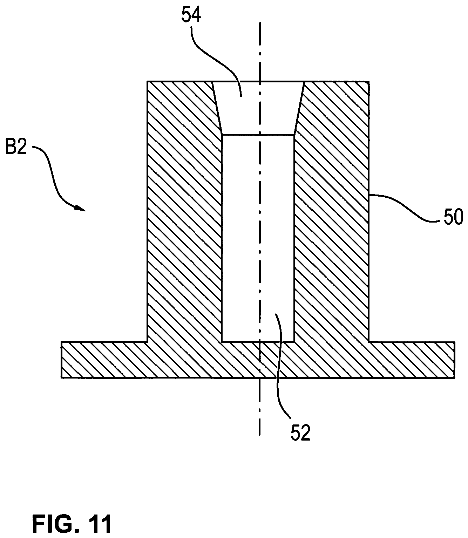

Wie man anhand der Figuren 4, 9 und 10 erkennen kann, wird das Federverbindungselement 1 in eine Bohrung (siehe Figur 4) oder in einen Befestigungsdom 50 mit der Bohrung 52 gemäß den Figuren 9 und 10 eingesetzt. Dabei wird das Federverbindungselement 1 gar nicht um seine Längsachse L verschwenkt oder gedreht oder nur in einem Winkelbereich <360 ° (siehe oben). Um das Einsetzen zu erleichtern, verjüngt sich die Drahtwendel 20 an ihrem zweiten Ende, das dem Spiralbund 30 abgewandt ist (vergleiche Figuren 1 und 2). Es ist in diesem Zusammenhang ebenfalls bevorzugt, am Eingang der Bohrung 52 des Bauteils B2 einen größeren Öffnungsdurchmesser vorzusehen als in der übrigen Bohrung 52. Dies ist im Speziellen in Figur 11 erkennbar, die eine vergrößerte Darstellung des Befestigungsdoms 50 mit Bohrung 52 zeigt.

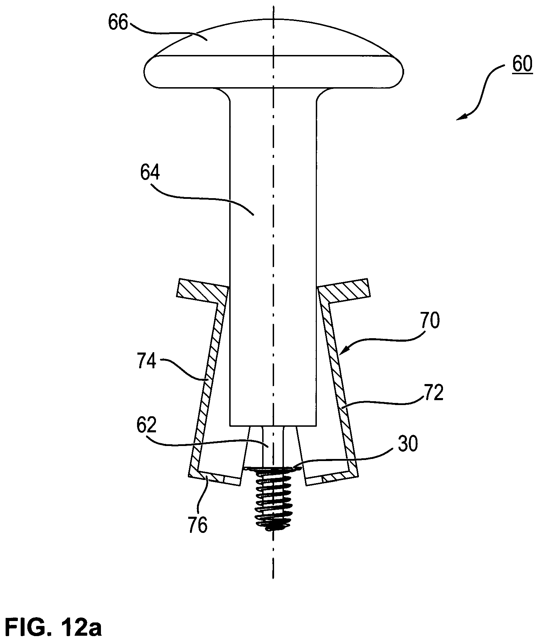

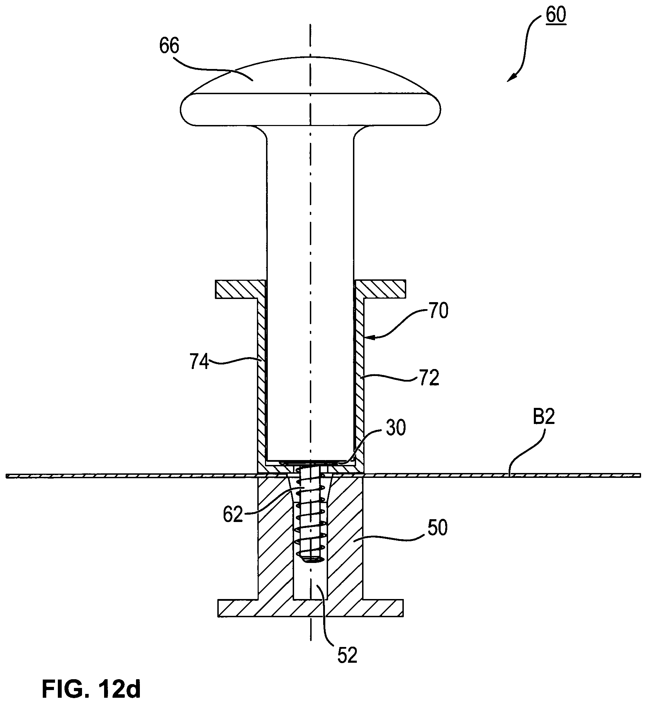

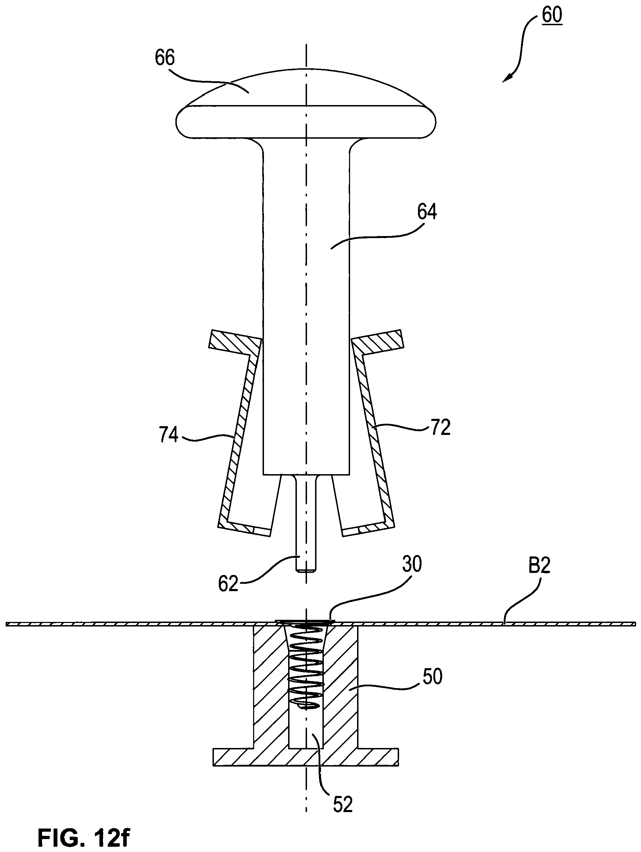

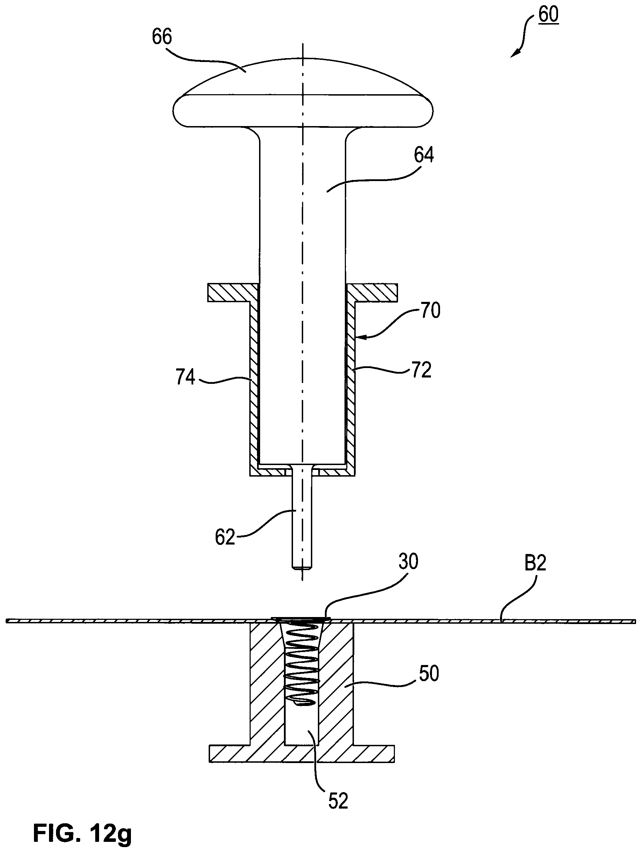

Das Federverbindungselement 1 wird vorzugsweise mit einem Installationswerkzeug 60 in die Bohrung 50 eingesetzt, wie es in Figur 12a gezeigt ist. Das Installationswerkzeug 60 umfasst einen Installationsdorn 62, auf den das Federverbindungselement 1 aufsteckbar ist. Zudem umfasst das Installationswerkzeug 60 einen Werkzeugschaft 64, der angrenzend an den Installationsdorn 62 angeordnet ist. Dieser Werkzeugschaft 64 weist einen größeren Außendurchmesser als der Installationsdorn 62 auf. Aufgrund dieser geometrischen Ausgestaltung des Installationswerkzeugs 60 ist sichergestellt, dass das Federverbindungselement 1 während der Installation nicht in axialer Richtung überstreckt wird. Des Weiteren umfasst das Installationswerkzeug 60 einen Werkzeugkopf 66, mit dem eine axiale Druckkraft auf den Installationsdorn 62 aufbringbar ist.

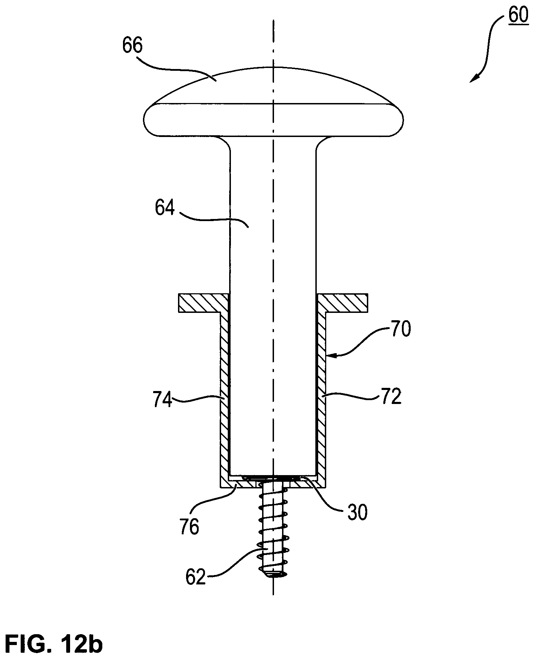

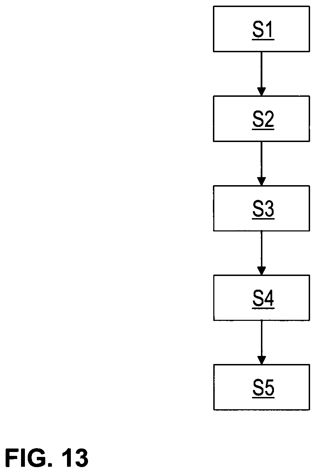

Gemäß einer bevorzugten Ausführungsform des Installationswerkzeugs 60 ist zusätzlich eine Installationshülse 70 am Werkzeugschaft 64 vorgesehen. Diese Installationshülse 70 ist verschiebbar in axialer Richtung auf dem Werkzeugschaft 64 angeordnet. Sie ist derart geformt, dass sie den Spiralbund 30 eines zu installierenden Federverbindungselements 1 hintergreifen kann. Stützt sich der Installationsdorn 62 am zentralen Zugelement 40 ab und wird die Installationshülse 70 gemeinsam mit dem hintergriffenen Spiralbund 30 in Richtung Werkzeugkopf 66 verschoben, dann wird dadurch das Federverbindungselement 1 in axialer Richtung gestreckt. Diese axiale Streckung des Federverbindungselements 1 bewirkt gleichzeitig, dass sich das Federverbindungselement 1 in radialer Richtung verjüngt. Auf diese Weise wird ein Einsetzen des Federverbindungselements in die Bohrung 50 erleichtert. Dieser Zustand ist in der Figur 12b veranschaulicht. In gleicher Weise ist es natürlich ebenfalls bevorzugt, das Installationswerkzeug 60 ohne die Installationshülse 70 zu nutzen. Im Folgenden wird die Installation des Federverbindungselements 1 anhand der Figuren 12a bis 12g und des Flussdiagramms in Figur 13 erläutert. Zunächst wird im Schritt S1 das Federverbindungselement 1 auf den Installationsdorn 62 gesteckt. In einem weiteren optionalen Schritt S2 wird die Installationshülse 70 dazu benutzt, das Federverbindungselement 1 axial zu strecken und radial zu verjüngen. Zu diesem Zweck ist die Installationshülse 70 vorzugsweise mehrteilig ausgebildet, um den Spiralbund 30 gezielt zu hintergreifen und wieder freizugeben. Gemäß einer bevorzugten Ausführungsform ist die Installationshülse 70 in Längsrichtung in zwei Hülsenhälften 72, 74 geteilt (siehe Figur 12a). Gemäß einer weiteren nicht gezeigten bevorzugten Ausführungsform der Installationshülse ist ein Hülsenboden 76 angrenzend an den Spiralbund 30 aufklappbar und verschließbar vorgesehen. Dadurch könnte man gezielt den Spiralbund 30 erfassen und wieder freigeben.

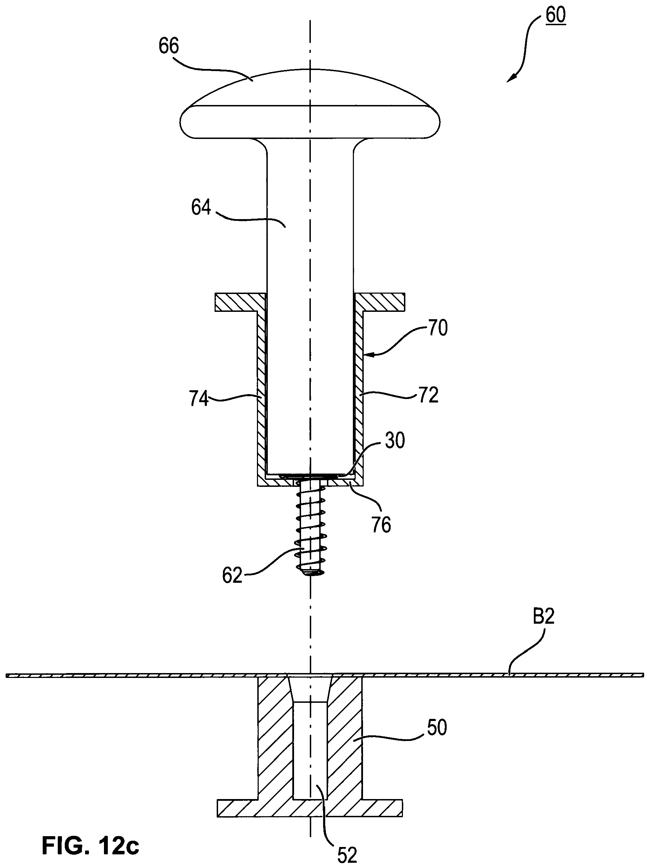

Nachdem das Federverbindungselement 1 gestreckt auf dem Installationsdorn 62 angeordnet worden ist, wird es im Schritt S3 in die fluchtend übereinander angeordneten Bohrungen der Bauteile B1, B2 eingesetzt. Sollte keine Installationshülse 70 verwendet werden, ist das Federverbindungselement 1 in gleicher Weise in die Bohrungen der Bauteile B1, B2 einsetzbar. Um eine axiale Streckung des Federverbindungselementes 1 und somit eine radiale Verjüngung zu erreichen, setzt der Installationsdorn 62 das Federverbindungselement 1 so weit in die Bohrung 52 ein, bis sich der Spiralbund 30 an der Bauteiloberseite abstützt. Wird nun der Installationsdorn 62 weiter in die Bohrung 52 eingeführt, erfolgt eine axiale Streckung und radiale Verjüngung des Federverbindungselements 1 (siehe Figuren 12c bis 12d).

Wie sich aus obiger Beschreibung ergibt, wird das Federverbindungselement 1 im Wesentlichen drehungsfrei in der Bohrung 52 installiert.

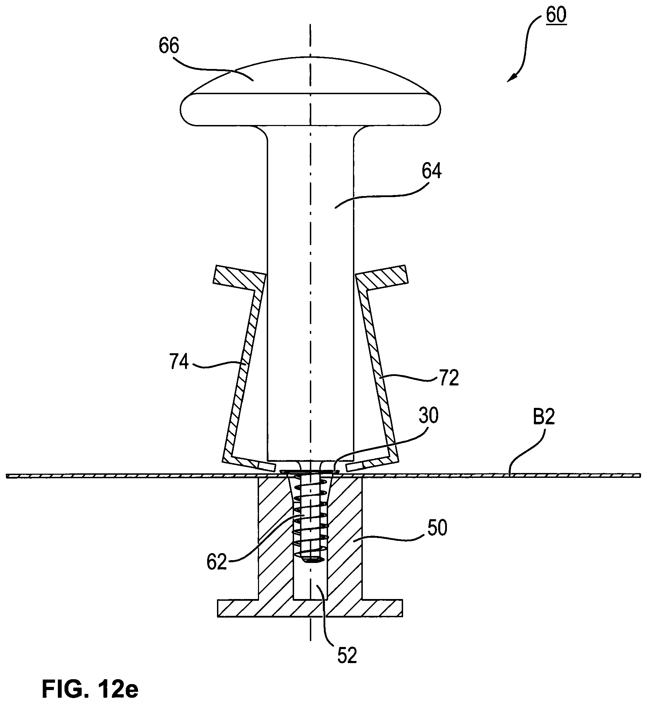

Im Schritt S4 wird das Federverbindungselement 1 entlastet, sodass sich die radiale Außenseite der Drahtwendel 20 in der Bauteilwand verkrallt. Gemäß einer bevorzugten Ausführungsform vorliegender Erfindung erfolgt die Entlastung des Federverbindungselements 1, indem die Installationshülse 70 den Spiralbund 30 freigibt (siehe Figur 12e). Dadurch federt der Spiralbund 30 in Richtung der Bohrung 52, da der Installationsdorn 62 das Federverbindungselement 1 immer noch axial streckt und festhält. Danach wird der Installationsdorn 62 aus der Bohrung 52 entfernt, sodass das Federverbindungselement in den Verkrallsitz übergeht. Sollte keine Installationshülse 70 verwendet werden, wird der Installationsdorn 62 einfach aus dem Federverbindungselement 1 entfernt.

Auf diese Weise ist das Federverbindungselement 1 vollständig in der Bohrung 52 installiert, wodurch die Bauteile B1 und B2 verlässlich miteinander verbunden sind. In einem optionalen Schritt S5 werden die Hülsenhälften 72, 74 wieder geschlossen, sodass die Installationshülse 70 am Werkzeugschaft 64 anliegt.

In gleicher Weise wie der Installationsdorn 62 genutzt worden ist, um eine Druckkraft auf das Zugelement 40 aufzubringen, wird dafür gemäß einer anderen bevorzugten Ausführungsform auch der Installationssteg (siehe oben, nicht gezeigt) verwendet. Sobald das Federverbindungselement vollständig in der Bohrung 52 installiert ist, kann der Installationssteg über die bevorzugte Sollbruchstelle aus dem Inneren der Drahtwendel entfernt werden.

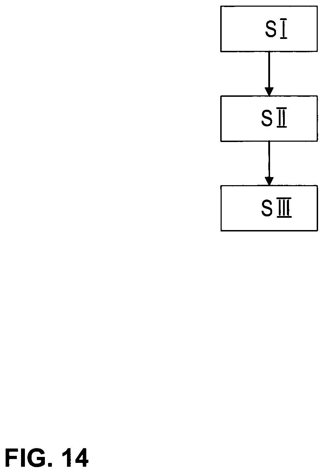

Vorliegende Erfindung umfasst zudem ein Deinstallationsverfahren für ein in der Bauteilöffnung 52 installiertes Federverbindungselement 1. Dieses Deinstallationsverfahren ist durch das Flussdiagramm in Figur 14 veranschaulicht. Um das Federverbindungselement 1 aus der Bohrung 52 zu entfernen, wird in einem ersten Schritt S I der Spiralbund 30 des Federverbindungselements 1 gegriffen. Nachfolgend bringt man im Schritt S II eine axiale Zugbelastung auf das Federverbindungselement 1 auf. Basierend auf dieser axialen Zugbelastung wird das Federverbindungselement 1 in axialer Richtung gestreckt und gleichzeitig verjüngt. Dies führt bereits zu einer Lockerung des Verkrallsitzes des Federverbindungselements 1 in der Bauteilwand. Abschließend wird das Federverbindungselement 1 vollständig aus der Bauteilöffnung 52 entfernt (Schritt S III). Erfindungsgemäß bevorzugt erfolgt das Deinstallationsverfahren manuell mit einer Zange oder automatisch mit Hilfe einer entsprechenden Entfernvorrichtung.

### Bezugszeichenliste

- B1, B2: Bauteil
- s: axiale Dicke
- b: radiale Breite
- r: Krümmungsradius
- p: Steigung
- U: Umlauf
- L: Längsachse
- d₁, d₂: Außendurchmesser
- 1: Federverbindungselement
- 10: Draht
- 20: Drahtwendel
- 22,23: Windung
- 30: Spiralbund
- 40: Zugelement
- 50: Befestigungsdom
- 52: Bauteilöffnung, Bohrung
- 60: Installationswerkzeug
- 62: Installationsdorn
- 64: Installationsschaft
- 66: Werkzeugkopf
- 70: Installationshülse
- 72, 74: Hülsenhälften
- 76: Hülsenboden

## Patentansprüche

1. Federverbindungselement (1), mit dem über einen Verkrallsitz in mindestens einer Bauteilöffnung (52) mindestens zwei Bauteile (B1, B2) miteinander verbindbar sind und das die folgenden Merkmale aufweist:
eine sprungfederähnliche Drahtwendel (20) mit einem ersten und einem zweiten Ende, die eine Mehrzahl von axial zueinander beabstandeten Windungen (22, 23) umfasst,
einen sich radial über einen Umfang der Drahtwendel (20) hinaus erstreckenden Spiralbund (30), der am ersten Ende der Drahtwendel (20) angeordnet ist, und
ein zentrales Zugelement (40), das radial in die Drahtwendel (20) ragend am zweiten Ende der Drahtwendel (20) angeordnet ist, sich nicht axial über die Drahtwendel (20) hinaus erstreckt und mit dem das Federverbindungselement (1) in eine Bauteilöffnung (52) im Wesentlichen drehungsfrei einziehbar ist, wobei
das Federverbindungselement (1) durch eine axiale Zugbelastung radial verjüngbar ist, um ein Einsetzen in die mindestens eine Bauteilöffnung (52) zu erleichtern, **dadurch gekennzeichnet, dass**
die Windungen (22, 23) der Drahtwendel (20) radial auswärts eine kantige Form aufweisen, sodass die Windungen (22, 23) in einer Öffnungswand des Bauteils (B2) verkrallbar sind.

2. Federverbindungselement (1) gemäß Anspruch 1, in dem ein Draht (10) der Drahtwendel (20) in einem Querschnitt und bezogen auf die Drahtwendel (20) eine radiale Breite b und eine axiale Dicke s umfasst mit einem Größenverhältnis 1,25 ≤ b/s ≤ 3,5, bevorzugt 2 ≤ b/s ≤ 3.

3. Federverbindungselement (1) gemäß Anspruch 1 oder 2, in dem ein Draht (10) der Drahtwendel (20) in einem Querschnitt und bezogen auf die Drahtwendel (20) zumindest an der radialen Außenseite der Drahtwendel (20) einen Krümmungsradius r aufweist, der kleiner ist als eine axiale Dicke s des Drahts (10).

4. Federverbindungselement (1) gemäß einem der Ansprüche 1 bis 3, in dem eine Steigung p der Drahtwendel (20) pro Umlauf U im Vergleich zu einer axialen Dicke s eines Drahts (10) der Drahtwendel (20) im Querschnitt und bezogen auf die Drahtwendel (20) den folgenden Wert annimmt p ≥ 1,25 s U⁻¹, bevorzugt 1,25 s ≤ p ≤ 3,5 s, weiter bevorzugt 1,25 s ≤ p ≤ 2,7 s und noch mehr bevorzugt 2,0 s ≤ p ≤ 2,7 s

5. Federverbindungselement (1) gemäß einem der vorhergehenden Ansprüche, in dem ein Draht (10) der Drahtwendel (20) mit einer axialen Dicke s und einer radialen Breite b im Querschnitt und bezogen auf die Drahtwendel (20) folgendes Profil aufweist:
- in Breitenrichtung eiförmig oder linsenförmig und/oder
- in Breitenrichtung eiförmig oder linsenförmig und in Dickenrichtung einseitig oder beidseitigabgeflacht und/oder
- in Dickenrichtung länglich und/oder
- in Dickenrichtung länglich mit einer radial auswärtigen konkaven Einbuchtung und/oder
- in Dickenrichtung S-förmig und/oder
- in Dickenrichtung länglich mit einer in Breitenrichtung radial auswärtigen Ausbuchtung und einer radial einwärtigen Einbuchtung.

6. Federverbindungselement (1) gemäß einem der vorhergehenden Ansprüche, in dem ein Draht (10) der Drahtwendel (20) im Querschnitt und bezogen auf die Drahtwendel (20) an einer radialen Außenseite der Drahtwendel (20) eine Verkrallkontur mit einer Schneidenrichtung aufweist, die bezogen auf eine Längsachse (L) des Federverbindungselements (1) in einem Winkel von γ > 90 ° angeordnet ist.

7. Federverbindungselement (1) gemäß Anspruch 1, in dem die Drahtwendel (20) eine zylindrische Form aufweist und sich mindestens eine der Windungen (23) der Drahtwendel (20) über einen Außendurchmesser (d₁) der zylindrischen Drahtwendel (20) hinaus erstreckt.

8. Federverbindungselement (1) gemäß Anspruch 7, in dem die mindestens eine Windung (23) in einem axialen Mittenbereich der Drahtwendel (20) angeordnet ist.

9. Federverbindungselement (1) gemäß einem der vorhergehenden Ansprüche, in dem die Drahtwendel (20) 3-15, vorzugsweise 5-10 Windungen (22, 23) umfasst.

10. Federverbindungselement (1) gemäß einem der vorhergehenden Ansprüche, in dem die Windungen (22, 23) der Drahtwendel (20) in einem radialen Querschnitt abgerundet und/oder S-förmig oder zumindest radial auswärts scharfkantig ausgeformt sind.

11. Federverbindungselement (1) gemäß einem der vorhergehenden Ansprüche, in dem der Spiralbund (30) sich konisch verjüngend in Richtung der Drahtwendel (20) ausgebildet ist.

12. Federverbindungselement (1) gemäß einem der vorhergehenden Ansprüche, in dem das zentrale Zugelement (40) eine für ein Installationswerkzeug (60) über ein Inneres der Drahtwendel (20) zugängliche Abstützfläche bereitstellt.

13. Federverbindungselement (1) gemäß einem der Ansprüche 1-11, in dem das zentrale Zugelement (40) einen axial über den Spiralbund (30) hinaus ragenden Installationssteg aufweist, der innerhalb der Drahtwendel (20) verläuft.

14. Federverbindungselement (1) gemäß Anspruch 13, in dem der Installationssteg über eine Sollbruchstelle im Inneren der Drahtwendel (20) aus dem Federverbindungselement (1) entfernbar ist.

15. Federverbindungselement (1) gemäß einem der vorhergehenden Ansprüche, in dem sich die Drahtwendel (20) im Bereich des zweiten Endes in axialer Richtung verjüngt.

16. Installationsverfahren für ein Federverbindungselement (1) mit dem über einen Verkrallsitz in mindestens einer Bauteilöffnung (52) mindestens zwei Bauteile (B1, B2) miteinander verbindbar sind, insbesondere das Federverbindungselement (1) gemäß einem der vorhergehenden Ansprüche, aufweisend eine sprungfederähnliche Drahtwendel (20) mit einem ersten und einem zweiten Ende, einen sich radial über einen Umfang der Drahtwendel (20) hinaus erstreckenden Spiralbund (30), der am ersten Ende der Drahtwendel (20) angeordnet ist, und ein zentrales Zugelement (40), das radial in die Drahtwendel (20) ragend am zweiten Ende der Drahtwendel (20) angeordnet ist, wobei Windungen (22, 23) der Drahtwendel (20) radial auswärts eine kantige Form aufweisen und das Installationsverfahren die folgenden Schritte aufweist:
a. Anordnen von mindestens einem ersten (B1) und einem zweiten Bauteil (B2) mit zueinander fluchtenden Bauteilöffnungen (52) und Positionieren des Federverbindungselements (1) an einem Eingang der Bauteilöffnung (52) des ersten Bauteils (B1),
b. Aufbringen einer bezogen auf das Federverbindungselement (1) axial gerichteten Druckkraft auf das zentrale Zugelement (40), sodass das Zugelement (40) die Drahtwendel (20) drehungsfrei in die Bauteilöffnung (52) zieht, oder Strecken des Federverbindungselements (1) durch Aufbringen einer Zugkraft zwischen Spiralbund (30) und Zugelement (40), sodass das Federverbindungselement (1) axial gestreckt und radial verjüngt wird, und Einsetzen des gestreckten Federverbindungselements (1) drehungsfrei in die Bauteilöffnung (52), und
c. Entlasten des Zugelements (40), nachdem sich der Spiralbund (30) am ersten Bauteil (B1) abstützt, sodass sich mindestens eine der Windungen (22, 23) der Drahtwendel (20) in mindestens einer der Bauteilöffnungen (52) verankert und somit verkrallt, so dass sowohl eine kraftschlüssige wie auch eine formschlüssige Verbindung zwischen dem Federverbindungselement (1) und dem mindestens einen ersten Bauteil (B1) entsteht.

17. Installationsverfahren gemäß Anspruch 16, aufweisend:
Aufbringen der Druckkraft auf das Zugelement (40) über einen Installationsdorn (62) oder einen am Zugelement (40) vorgesehenen Installationssteg.

18. Deinstallationsverfahren für ein in einer Bauteilöffnung (52) installiertes Federverbindungselement (1) mit dem über einen Verkrallsitz in mindestens einer Bauteilöffnung (52) mindestens zwei Bauteile (B1, B2) miteinander verbunden sind, aufweisend eine schraubfederähnliche Drahtwendel (20) mit einem ersten und einem zweiten Ende, einen sich radial über einen Umfang der Drahtwendel (20) hinaus erstreckenden Spiralbund (30), der am ersten Ende der Drahtwendel (20) angeordnet ist, und ein zentrales Zugelement (40), das radial in die Drahtwendel (20) ragend am zweiten Ende der Drahtwendel (20) angeordnet ist, wobei Windungen (22, 23) der Drahtwendel (20) radial auswärts eine kantige Form aufweisen und das Deinstallationsverfahren die folgenden Schritte aufweist:
a. Greifen des Spiralbunds (20) des Federverbindungselements (1),
b. Aufbringen einer axialen Zugbelastung auf das Federverbindungselement (1), sodass das Federverbindungselement (1) gestreckt und verjüngt wird, und
c. vollständiges Entfernen des Federverbindungselements (1) aus der Bauteilöffnung (52).

19. Installationswerkzeug (60) für ein Federverbindungselement (1) aufweisend eine sprungfederähnliche Drahtwendel (20) mit einem ersten und einem zweiten Ende, einen sich radial über einen Umfang der Drahtwendel (20) hinaus erstreckenden Spiralbund (30), der am ersten Ende der Drahtwendel (20) angeordnet ist, und ein zentrales Zugelement (40), das radial in die Drahtwendel (20) ragend am zweiten Ende der Drahtwendel (20) angeordnet ist, wobei das Installationswerkzeug (60) die folgenden Merkmale aufweist:
a. einen Installationsdorn (62), auf den das Federverbindungselement (1) aufsteckbar ist,
b. einen Werkzeugschaft (64) angrenzend an den Installationsdorn (62), der einen größeren Außendurchmesser als der Installationsdorn (62) aufweist, sodass ein Überstrecken des Federverbindungselements (1) verhindert ist, und
c. einen Werkzeugkopf (66), über den eine axiale Druckkraft auf den Installationsdorn (62) aufbringbar ist, **dadurch gekennzeichnet, dass**
d. auf dem Werkzeugschaft (64) eine verschiebbare Installationshülse (70) angeordnet ist, mit der der Spiralbund (30) hintergreifbar ist, sodass über eine axiale Verschiebung der Installationshülse (70) eine streckende Belastung auf das Federverbindungselement (1) zwischen Installationshülse (70) und Installationsdorn (62) aufbringbar ist.

20. Installationswerkzeug (60) gemäß Anspruch 19, dessen Installationshülse (70) aus mindestens zwei Teilen (72, 74) besteht, sodass die Installationshülse (70) vom Spiralbund (30) entfernbar ist.

21. Bauteilverbund aus mindestens zwei Bauteilen (B1, B2) mit jeweils einer Bauteilöffnung (52), in der ein Federverbindungselement (1) gemäß einem der Ansprüche 1 bis 15 installiert ist.

## Claims

1. Spring connection element (1) by means of which at least two components (B1, B2) can be connected to each other by means of a claw-fit in at least one component opening (52) and which comprises the following features:
a spiral spring-like wire coil (20) having a first and a second end, which comprises a plurality of windings (22, 23) which are axially spaced with respect to each other,
a spiral collar (30) extending radially beyond a circumference of the wire coil (20), which is arranged at the first end of the wire coil (20), and
a central traction element (40), which is arranged at the second end of the wire coil protruding radially into the wire coil (20), which does not extend axially beyond the wire coil (20), and by means of which the spring connection element (1) can be pulled into a component opening (52) substantially rotation-free, wherein
the spring connection element (1) can radially be tapered by an axial tensile loading in order to facilitate an insertion into the at least one component opening (52), **characterized in that**
the windings (22, 23) of the wire coil (20) have radially outwardly an angular shape so that the windings (22, 23) can claw in an opening wall of the component (B2).

2. Spring connection element (1) according to claim 1, in which a wire (10) of the wire coil (20) comprises in a cross-section and with respect to the wire coil (20) a radial width b and an axial thickness s with a size ratio of 1.25 ≤ b/s ≤ 3.5, preferably 2 ≤ b/s ≤ 3.

3. Spring connection element (1) according to claim 1 or 2, in which a wire (10) of the wire coil (20) comprises in a cross-section and with respect to the wire coil (20) at least at the radially outer side of the wire coil a radius of curvature r, which is smaller than an axial thickness s of the wire (10)

4. Spring connection element (1) according to one of the claims 1 to 3, in which a pitch p of the wire coil (20) per turn U compared to an axial thickness s of a wire (10) of the wire coil (20) in cross-section and with respect to the wire coil (20) has the following value p ≥ 1.25 s U⁻¹, preferably 1.25 s ≤ p ≤ 3.5 s, more preferably 1.25 s ≤ p ≤ 2.7 s and still more preferably 2.0 s ≤ p ≤ 2.7 s

5. Spring connection element (1) according to one of the preceding claims, in which a wire (10) of the wire coil (20) with an axial thickness s and a radial width b in cross-section and with respect to the wire coil (20) has the following profile:
- in the width direction oval-shaped or lenticular and/or
- in the width direction oval-shaped or lenticular and in the thickness direction flattened on one or both sides and/or
- in the thickness direction elongated and/or
- in the thickness direction elongated with a radially outward concave indentation and/or
- in the thickness direction S-shaped and/or
- in the thickness direction elongated with a radially outward bulge in the width direction and a radially inward indentation.

6. Spring connection element (1) according to one of the preceding claims, in which a wire (10) of the wire coil (20) comprises in cross-section and with respect to the wire coil (20) at a radially outer side of the wire coil (20) a clawing contour with a cutting edge-direction, which is arranged at an angle of γ > 90° with respect to a longitudinal axis (L) of the spring connection element (1).

7. Spring connection element (1) according to claim 1, in which the wire coil (20) has a cylindrical shape and at least one of the windings (23) of the wire coil (20) extends beyond an outer diameter (d₁) of the cylindrical wire coil (20).

8. Spring connection element (1) according to claim 7, in which the at least one winding (23) is arranged in an axial central portion of the wire coil (20).

9. Spring connection element (1) according to one of the preceding claims, in which the wire coil (20) comprises 3-15 windings, preferably 5-10 windings (22, 23).

10. Spring connection element (1) according to one of the preceding claims, in which the windings (22, 23) of the wire coil (20) are, in a radial cross-section, formed round and/or S-shaped or at least radially outwardly sharp-edged.

11. Spring connection element (1) according to one of the preceding claims, in which the spiral collar (30) is formed conically tapered in the direction of the wire coil (20).

12. Spring connection element (1) according to one of the preceding claims, in which the central traction element (40) provides a support surface for an installation tool (60) which is accessible via an interior of the wire coil (20).

13. Spring connection element (1) according to one of the claims 1-11, in which the central traction element (40) has an installation web protruding axially beyond the spiral collar (30), which extends within the wire coil (20).

14. Spring connection element (1) according to claim 13, in which the installation web is removable from the spring connection element (1) by means of a predetermined breaking point in the interior of the wire coil (20).

15. Spring connection element (1) according to one of the preceding claims, in which the wire coil (20) is tapered in the axial direction in the portion of the second end.

16. Installation method for a spring connection element (1) with which at least two components (B1, B2) are connectable with each other in at least one component opening (52) by means of a claw-fit, in particular the spring connection element (1) according to one of the preceding claims, comprising a spiral spring-like wire coil (20) having a first and a second end, a spiral collar (30) extending radially beyond a circumference of the wire coil (20), which is arranged at the first end of the wire coil (20), and a central traction element (40) protruding radially into the wire coil (20), which is arranged at the second end of the wire coil (20), wherein the windings (22, 23) of the wire coil (20) have radially outwardly an angular shape and the installation method comprises the following steps:
a. arranging at least a first (B1) and a second component (B2) with mutually aligned component openings (52) and positioning the spring connection element (1) at an entrance of the component opening (52) of the first component (B1),
b. applying a compressive force on the central traction element (40), which is directed axially with respect to the spring connection element (1), so that the traction element (40) pulls the wire coil (20) rotation-free into the component opening (52), or
stretching the spring connection element (1) by applying a tensile force between spiral collar (30) and traction element (40), such that the spring connection element (1) is axially stretched and radially tapered, and inserting the stretched spring connection element (1) rotation-free into the component opening (52), and
c. relieving of the traction element (40), after the spiral collar (30) is supported on the first component (B1), so that at least one of the windings (22, 23) of the wire coil (20) anchors in at least one of the component openings (52) and thus claws, so that both a force-fit as well as a form-fit connection between the spring connection element (1) and the at least one first component (B1) arises.

17. Installation method according to claim 16, comprising:
applying the compressive force on the traction element (40) by means of an installation mandrel (62) or an installation web provided at the traction element (40).

18. Deinstallation method for a spring connection element (1) installed in a component opening (52) with which at least two components (B1, B2) are connected with each other in at least one component opening (52) by means of a claw-fit comprising a spiral spring-like wire coil (20) having a first and a second end, a spiral collar (30) extending radially beyond a circumference of the wire coil (20), which is arranged at the first end of the wire coil (20), and a central traction element (40) radially protruding into the wire coil (20), which is arranged at the second end of the wire coil (20), wherein the windings (22, 23) of the wire coil (20) have radially outwardly an angular shape and the deinstallation method comprises the steps of:
a. gripping the spiral collar (20) of the spring connection element (1),
b. applying an axial tensile load on the spring connection element (1), so that the spring connection element (1) is stretched and tapered, and
c. completely removing the spring connection element (1) from the component opening (52).

19. Installation tool (60) for a spring connection element (1) comprising a spiral spring-like wire coil (20) having a first and a second end, a spiral collar (30) extending radially beyond a circumference of the wire coil (20), which is arranged at the first end of the wire coil (20), and a central traction element (40) protruding radially into the wire coil (20), which is arranged at the second end of the wire coil (20), said installation tool (60) comprising the following features:
a. an installation mandrel (62) onto which the spring connection element can be plugged,
b. a tool shank (64) adjacent to the installation mandrel (62), which has a larger outer diameter than the installation mandrel (62), so that an overstretching of the spring connection element (1) is prevented, and
c. a tool head (66) by means of which an axial compressive force can be applied on the installation mandrel (62), **characterized in that**
d. a slidable installation sleeve (70) is arranged on the tool shank (64), by means of which the spiral collar (30) can be engaged from behind, so that by means of an axial displacement of the installation sleeve (70) a stretching load can be applied on the spring connection element (1) between installation sleeve (70) and installation mandrel (62).

20. Installation tool (60) according to claim 19, the installation sleeve (70) of which consists of at least two parts (72, 74), so that the installation sleeve (70) is removable from the spiral collar (30).

21. Component compound of at least two components (B1, B2), each having a component opening (52) in which a spring connection element (1) according to one of the claims 1 to 15 is installed.

## Revendications

1. Élément de liaison élastique (1) permettant de relier au moins deux composants (B1, B2) entre eux par le biais d'un siège à griffes dans au moins une ouverture de composant (52), et présentant les caractéristiques suivantes :
- une spirale de fil (20) semblable à un ressort, comprenant une première et une deuxième extrémité, laquelle comporte une pluralité de spires (22, 23) espacées axialement les unes des autres,
- un collet hélicoïdal (30) s'étendant radialement sur le pourtour de la spirale de fil (20), lequel est disposé à la première extrémité de la spirale de fil (20), et
- un élément de traction central (40) disposé à la deuxième extrémité de la spirale de fil (20) en faisant saillie radialement dans la spirale de fil (20), lequel ne s'étend pas axialement au-delà de la spirale de fil (20) et peut être rétracté quasiment sans rotation dans une ouverture de composant (52) avec l'élément de liaison élastique (1), dans lequel
- l'élément de liaison élastique (1) peut être aminci radialement par une charge de tension axiale, pour faciliter une insertion dans l'au moins une ouverture de composant (52), **caractérisé en ce que**
- les spires (22, 23) de la spirale de fil (20) présentent une forme angulaire radialement vers l'extérieur, de sorte que les spires (22, 23) peuvent s'accrocher dans une paroi d'ouverture du composant (B2).

2. Élément de liaison élastique (1) selon la revendication 1, dans lequel un fil (10) de la spirale de fil (20) comporte, dans une section transversale et par rapport à la spirale de fil (20), une largeur radiale b et une épaisseur axiale s avec un rapport de grandeur de 1,25 ≤ b/s ≤ 3,5, de préférence de 2 ≤ b/s ≤ 3.

3. Élément de liaison élastique (1) selon la revendication 1 ou 2, dans lequel un fil (10) de la spirale de fil (20) comporte, dans une section transversale et par rapport à la spirale de fil (20), un rayon de courbure r au moins sur le côté extérieur radial de la spirale de fil (20), lequel est inférieur à une épaisseur axiale s du fil (10).

4. Élément de liaison élastique (1) selon l'une des revendications 1 à 3, dans lequel une pente p de la spirale de fil (20) par révolution U prend la valeur de p ≥ 1,25 s U⁻¹, de préférence de 1,25 s ≤ p ≤ 3,5 s, de façon plus préférentielle de 1,25 s ≤ p ≤ 2,7 s et mieux encore, de 2,0 s ≤ p ≤ 2,7 s, dans la section transversale et par rapport à la spirale de fil (20), en comparaison avec une épaisseur axiale s d'un fil (10) de la spirale de fil (20).

5. Élément de liaison élastique (1) selon l'une des revendications précédentes, dans lequel un fil (10) de la spirale de fil (20) avec une épaisseur axiale s et une largeur radiale b présente le profil suivant dans la section transversale et par rapport à la spirale de fil (20) :
- ovoïde ou lenticulaire dans le sens de la largeur et/ou
- ovoïde ou lenticulaire dans le sens de la largeur et aplati sur un ou deux côtés dans le sens de l'épaisseur et/ou
- allongé dans le sens de l'épaisseur et/ou
- allongé dans le sens de l'épaisseur avec un évidement concave radialement vers l'extérieur et/ou
- en forme de S dans le sens de l'épaisseur et/ou
- allongé dans le sens de l'épaisseur avec un bombement radial vers l'extérieur dans le sens de la largeur et un évidement radial vers l'intérieur.

6. Élément de liaison élastique (1) selon l'une des revendications précédentes, dans lequel un fil (10) de la spirale de fil (20) présente, dans la section transversale et par rapport à la spirale de fil (20), un contour à griffes avec une direction de tranchant sur un côté extérieur radial de la spirale de fil (20), lequel est disposé selon un angle de γ > 90° par rapport à un axe longitudinal (L) de l'élément de liaison élastique (1).

7. Élément de liaison élastique (1) selon la revendication 1, dans lequel la spirale de fil (20) présente une forme cylindrique et l'une au moins des spires (23) de la spirale de fil (20) s'étend au-delà d'un diamètre extérieur (d₁) de la spirale de fil (20) cylindrique.

8. Élément de liaison élastique (1) selon la revendication 7, dans lequel l'au moins une spire (23) est disposée dans une région centrale axiale de la spirale de fil (20).

9. Élément de liaison élastique (1) selon l'une des revendications précédentes, dans lequel la spirale de fil (20) comporte entre 3 et 15 spires (22, 23), de préférence entre 5 et 10.

10. Élément de liaison élastique (1) selon l'une des revendications précédentes, dans lequel les spires (22, 23) de la spirale de fil (20) sont arrondies dans une section transversale radiale et/ou en forme de S ou du moins formées avec des bords vifs radialement vers l'extérieur.

11. Élément de liaison élastique (1) selon l'une des revendications précédentes, dans lequel le collet hélicoïdal (30) est conçu de manière à s'amincir de façon conique dans la direction de la spirale de fil (20).

12. Élément de liaison élastique (1) selon l'une des revendications précédentes, dans lequel l'élément de traction central (40) fournit une surface d'appui sur un intérieur de la spirale de fil (20) pour un outil d'installation (60).

13. Élément de liaison élastique (1) selon l'une des revendications 1 à 11, dans lequel l'élément de traction central (40) présente une âme d'installation faisant saillie axialement vers l'extérieur au-delà du collet hélicoïdal (30), laquelle s'étend à l'intérieur de la spirale de fil (20) .

14. Élément de liaison élastique (1) selon la revendication 13, dans lequel l'âme d'installation peut être retirée de l'élément de liaison élastique (1) par le biais d'une zone de rupture à l'intérieur de la spirale de fil (20).

15. Élément de liaison élastique (1) selon l'une des revendications précédentes, dans lequel la spirale de fil (20) s'amincit dans la direction axiale dans la région de la deuxième extrémité.

16. Procédé d'installation pour un élément de liaison élastique (1) permettant de relier au moins deux composants (B1, B2) entre eux par le biais d'un siège à griffes dans au moins une ouverture de composant (52), en particulier pour l'élément de liaison élastique (1) selon l'une des revendications précédentes, présentant une spirale de fil (20) semblable à un ressort avec une première et une deuxième extrémité, un collet hélicoïdal (30) s'étendant radialement au-delà d'un pourtour de la spirale de fil (20), lequel est disposé à la première extrémité de la spirale de fil (20), et un élément de traction central (40) disposé à la deuxième extrémité de la spirale de fil (20) de manière à faire saillie radialement dans la spirale de fil (20), dans lequel des spires (22, 23) de la spirale de fil (20) présentent une forme angulaire radialement vers l'extérieur et le procédé d'installation présente les étapes suivantes :
a. agencement d'au moins un premier (B1) et un deuxième composant (B2) avec des ouvertures de composant (52) alignées entre elles, et positionnement de l'élément de liaison élastique (1) au niveau d'une entrée de l'ouverture de composant (52) du premier composant (B1),
b. application d'une force de pression orientée axialement par rapport à l'élément de liaison élastique (1) sur l'élément de traction central (40), de sorte que l'élément de traction (40) tire la spirale de fil (20) sans rotation dans l'ouverture de composant (52), ou
- étirement de l'élément de liaison élastique (1) par application d'une force de traction entre le collet hélicoïdal (30) et l'élément de traction (40), de manière à étirer l'élément de liaison élastique (1) axialement et à amincir celui-ci radialement, et insertion de l'élément de liaison élastique (1) étiré sans rotation dans l'ouverture de composant (52), et
c. soulagement de l'élément de traction (40) une fois que le collet hélicoïdal (30) s'appuie sur le premier composant (B1), de manière à ancrer et ainsi à accrocher l'une au moins des spires (22, 23) de la spirale de fil (20) dans l'une au moins des ouvertures de composant (52), de manière à obtenir une liaison aussi bien par adhérence que par complémentarité de forme entre l'élément de liaison élastique (1) et l'au moins un premier composant (B1).

17. Procédé d'installation selon la revendication 16, présentant :
- l'application de la force de pression sur l'élément de traction (40) par le biais d'une épine d'installation (62) ou d'une âme d'installation prévue sur l'élément de traction (40).

18. Procédé de désinstallation pour un élément de liaison élastique (1) installé dans une ouverture de composant (52), permettant de relier au moins deux composants (B1, B2) entre eux par le biais d'un siège à griffes dans au moins une ouverture de composant (52), présentant une spirale de fil (20) semblable à un ressort avec une première et une deuxième extrémité, un collet hélicoïdal (30) s'étendant radialement au-delà d'un pourtour de la spirale de fil (20), lequel est disposé à la première extrémité de la spirale de fil (20), et un élément de traction central (40) disposé à la deuxième extrémité de la spirale de fil (20) de manière à faire saillie radialement dans la spirale de fil (20), dans lequel des spires (22, 23) de la spirale de fil (20) présentent une forme angulaire radialement vers l'extérieur et le procédé de désinstallation présente les étapes suivantes :
a. saisie de la spirale de fil (20) de l'élément de liaison élastique (1),
b. application d'une charge de traction axiale sur l'élément de liaison élastique (1), de manière à étirer et amincir l'élément de liaison élastique (1), et
c. retrait complet de l'élément de liaison élastique (1) hors de l'ouverture de composant (52).

19. Outil d'installation (60) pour un élément de liaison élastique (1) présentant une spirale de fil (20) semblable à un ressort avec une première et une deuxième extrémité, un collet hélicoïdal (30) s'étendant radialement au-delà d'un pourtour de la spirale de fil (20), lequel est disposé à la première extrémité de la spirale de fil (20), et un élément de traction central (40) disposé à la deuxième extrémité de la spirale de fil (20) de manière à faire saillie radialement dans la spirale de fil (20), dans lequel l'outil d'installation (60) présente les caractéristiques suivantes :
a. une épine d'installation (62) sur laquelle l'élément de liaison élastique (1) peut être enfiché,
b. une tige d'outil (64) adjacente à l'épine d'installation (62), dont le diamètre extérieur est supérieur à celui de l'épine d'installation (62), de manière à empêcher un étirement excessif de l'élément de liaison élastique (1), et
c. une tête d'outil (66) permettant d'appliquer une force de pression axiale sur l'épine d'installation (62), **caractérisé en ce que**
d. une douille d'installation coulissante (70) est disposée sur la tige d'outil (64), laquelle permet d'engager le collet hélicoïdal (30) par derrière, de manière à pouvoir appliquer une charge d'étirement sur l'élément de liaison élastique (1) entre la douille d'installation (70) et l'épine d'installation (62) par un coulissement axial de la douille d'installation (70) .

20. Outil d'installation (60) selon la revendication 19, dont douille d'installation (70) est constituée d'au moins deux parties (72, 74), de manière à pouvoir retirer la douille d'installation (70) du collet hélicoïdal (30).

21. Assemblage de composants comprenant au moins deux composants (B1, B2) présentant respectivement une ouverture de composant (52), dans laquelle est installé un élément de liaison élastique (1) selon l'une des revendications 1 à 15.
